(19) Europäisches Patentamt
European Patent Office
Office européen des brevets

(11) **EP 4 229 132 B1**

(12) **EUROPEAN PATENT SPECIFICATION**

(45) Date of publication and mention
of the grant of the patent:
**31.07.2024 Bulletin 2024/31**

(21) Application number: **21794515.3**

(22) Date of filing: **14.10.2021**

(51) International Patent Classification (IPC):
*C08L 23/14* (2006.01)    *C08F 210/06* (2006.01)
*C08F 4/659* (2006.01)    *C08F 4/6592* (2006.01)

(52) Cooperative Patent Classification (CPC):
(C-Sets available)
**C08L 23/14; C08F 210/06;** C08L 2205/025;
C08L 2314/06                        (Cont.)

(86) International application number:
**PCT/EP2021/078499**

(87) International publication number:
**WO 2022/079190 (21.04.2022 Gazette 2022/16)**

(54) **POLYPROPYLENE COMPOSITIONS**

POLYPROPYLENZUSAMMENSETZUNGEN

COMPOSITIONS DE POLYPROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.10.2020 EP 20201895**

(43) Date of publication of application:
**23.08.2023 Bulletin 2023/34**

(73) Proprietor: **TotalEnergies OneTech Belgium
7181 Seneffe (BE)**

(72) Inventors:
• **COUSTHAM, Thomas
59243 Quarouble (FR)**
• **STANDAERT, Alain
1020 Bruxelles (BE)**
• **VANTOMME, Aurélien
7070 Mignault (BE)**
• **SIGWALD, Armelle
1400 Nivelles (BE)**

(74) Representative: **De Clercq & Partners
Edgard Gevaertdreef 10a
9830 Sint-Martens-Latem (BE)**

(56) References cited:
**EP-A1- 2 535 372    WO-A1-2016/116606**

EP 4 229 132 B1

(52) Cooperative Patent Classification (CPC): (Cont.)

C-Sets
**C08F 210/06, C08F 2/001;**
**C08F 210/06, C08F 2/02;**
**C08F 210/06, C08F 4/65927;**
**C08L 23/14, C08L 23/14;**
C08F 210/06, C08F 210/16, C08F 2500/05,
C08F 2500/12, C08F 2500/30, C08F 2500/31,
C08F 2500/33, C08F 2500/34, C08F 2500/35

**Description**

**Field of invention**

This invention relates to new polypropylene compositions and to articles comprising said polypropylene composition.

**Background of the invention**

Polypropylene offers a unique combination of mechanical and chemical properties. It has therefore found wide use in a large number of applications. It is generally of great importance to have a well processable material with good mechanical properties such as high flexural modulus and/or impact strength. A good flowability combined with adequate thermal properties are needed for achieving a good processability in various manufacturing methods of articles, thereby allowing a high production speed required for the mass production market.

The mechanical properties are also critical to avoid damage due to storing, handling or dropping of the articles made of polypropylene. Still further, the optical properties should be acceptable. Optical properties are mainly defined by the haze and the gloss of the material. The haze is influenced by the nature and the crystallinity of the polypropylene, lowering the intrinsic crystallinity reduces the haze but also reduces the stiffness. Hence, the balance of stiffness and haze is of great importance.

Metallocene-based polypropylenes exhibit a range of interesting properties such as optical (haze and gloss) and organoleptic (few Volatile Organic Compound (VOC) and extractables) properties, and good rigidity/impact balance. However, the following drawbacks related to processing issues were noticed:

1) poor injection ability due to a narrow molecular weight distribution obtained by the single-site mechanism of the metallocene catalyst,

2) low crystallization temperature that raises the cycle time in injection molding process.

Processing may be improved by several well-known methods: adding processing aids, ionizing or extruding with peroxides or controlled amount of oxygen. Aside from the added cost, numerous side effects are usually encountered, such as for example increase of gel content, worsening of mechanical properties, development of color and odors.

EP 2535372 A1 discloses propylene homo- or copolymer composition comprising an in-situ reactor blend of a Ziegler-Natta catalysed, nucleated polypropylene (znPP) and a metallocene catalysed polypropylene (mcPP), in a weight ratio in the range of 6:94 to 50:50 (wt% znPP: wt% mcPP), preferably in the range of 10:90 to 44:56 (wt% znPP: wt% mcPP).

While the manufacturers of polypropylene have continuously worked to improve the properties of polypropylene used in the manufacture of various articles, the ever-increasing requirements necessitate the further development of polypropylene.

There is thus still a need for resins that can be processed easily and offer simultaneously good mechanical properties while displaying superior optic and organoleptic properties.

**Summary of the invention**

It is therefore an object of the present invention to provide new polypropylene resins that have good mechanical properties and which can be easily processed.

In a first aspect, the present invention provides a polypropylene composition comprising:

(a) a first metallocene-catalyzed polypropylene (RPP-A) which is homopolymer, or a random copolymer of propylene and of a co-monomer; and

(b) a second metallocene-catalyzed polypropylene (RPP-B) which is a random copolymer of propylene and of a co-monomer;

wherein said polypropylene composition has:

- a total co-monomer content of at least 1.1 % by weight relative to the total weight of said polypropylene composition, as determined by $^{13}$C NMR analysis, said co-monomer being an alpha-olefin different from propylene;

- a melting temperature $T_m$ of at least 130.0 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10; and

- a co-monomer distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography; and

- a xylene soluble content (XS) of at most 3.0 % by weight.

In a second aspect, the present invention provides a process for the preparation of the polypropylene composition according to the first aspect of the invention comprising the steps of:

(i) providing a first metallocene-catalyzed polypropylene (RPP-A) which is homopolymer, or a random copolymer of propylene and of a co-monomer; and

(ii) providing a second metallocene-catalyzed polypropylene (RPP-B) which is a random copolymer of propylene and of a co-monomer;

(iii) and obtaining a polypropylene composition comprising said first and second metallocene-catalyzed polypropylene, wherein steps (i) and (ii) are carried out by polymerizing propylene and, if any, the co-monomer in the presence of at least one metallocene catalyst;

said polypropylene composition having:

- a total co-monomer content of at least 1.1 % by weight relative to the total weight of said polypropylene composition, as determined by $^{13}$C NMR analysis, said co-monomer being an alpha-olefin different from propylene;

- a melting temperature $T_m$ of at least 130 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10; and

- a co-monomer distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography and

- a xylene soluble content (XS) of at most 3.0 % by weight.

In a third aspect, the present invention encompasses an article comprising a polypropylene composition according to the first aspect of the invention.

The invention overcomes the drawbacks of the aforementioned strategies. The present invention provides polypropylene resins having broad molecular weight distributions, ideal co-monomer incorporation and improved processing and mechanical properties. The present polypropylene composition is a bimodal polypropylene combining co-monomer content and molecular weight bimodality. The present invention with the combination of the two bimodalities, (bimodality in co-monomer content and a bimodality in molecular weight distribution), allows an improvement of mechanical properties with good impact/ stiffness balance, a significant improvement of injectability (spiral flow: the longer the spiral flow the better the ability to inject). The difference of co-monomer concentration in the two distributions provides the advantage of increasing the crystallization temperature of the final composition and thereby decrease the cycle time for injection process.

After the polypropylene composition is produced, it may be formed into various articles, in extruded and injection applications, including but not limited to, injection moulding, blow moulding, injection stretch blow moulding (ISBM), cast or blown film extrusion, sheet extrusion, thermoforming, etc.

The independent and dependent claims set out particular and preferred features of the invention. Features from the dependent claims may be combined with features of the independent or other dependent claims as appropriate.

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other features indicated as being preferred or advantageous.

**Brief description of the figures**

Figure 1 represents a graph plotting the melt flow index $MI_{105}$ as a function of melt flow index $MI_2$ measured for polypropylene resins.

Figure 2 represents an example of the $^{13}$C NMR spectrum of a metallocene-catalyzed random propylene-ethylene copolymer containing about 5 % by weight of ethylene.

**Detailed description of the invention**

Before the present compositions, processes, articles, and uses encompassed by the invention are described, it is to be understood that this invention is not limited to particular compositions, processes, articles, and uses described, as such compositions, processes, articles, and uses may, of course, vary. It is also to be understood that the terminology used herein is not intended to be limiting, since the scope of the present invention will be limited only by the appended claims.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. When describing the compounds, processes, articles, and uses of the invention, the terms used are to be construed in accordance with the following definitions, unless the context dictates otherwise.

As used herein, the singular forms "a", "an", and "the" include both singular and plural referents unless the context clearly dictates otherwise. By way of example, "a resin" means one resin or more than one resin.

The terms "comprising", "comprises" and "comprised of' as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g., 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g., from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims and any of the embodiments can be used in any combination.

Preferred features and embodiments of the resins, processes, polymers, articles, and uses of this invention are set herein below. The scope of protection is defined by the claims.

In particular, the present invention concerns a polypropylene composition comprising

(a) a first metallocene-catalyzed polypropylene (RPP-A) which is homopolymer, or a random copolymer of propylene and of a co-monomer; and
(b) a second metallocene-catalyzed polypropylene (RPP-B) which is a random copolymer of propylene and of a co-monomer;

wherein said polypropylene composition has:

- a total co-monomer content of at least 1.1 % by weight relative to the total weight of said polypropylene composition, as determined by $^{13}C$ NMR analysis, said co-monomer being an alpha-olefin different from propylene;

- a melting temperature $T_m$ of at least 130 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10; and

- a co-monomer distribution ratio $R(M_z)/R(M_n)$ higher than 0.995, wherein $R(M_z)$ is the ratio at $M_z$ of the IR signal measured at 2959 $cm^{-1}$ on the signal at 2928 $cm^{-1}$, and $R(M_n)$ is the ratio at $M_n$ of the IR signal measured at 2959 $cm^{-1}$ on the signal at 2928 $cm^{-1}$, as determined by IR-detected gel permeation chromatography and

- a xylene soluble content (XS) of at most 3.0 % by weight, preferably at most 2.5 % by weight, preferably at most 2.3 % by weight, preferably at most 2.2 % by weight.

In some embodiments of the polypropylene composition as described hereinabove, said first metallocene-catalyzed polypropylene (RPP-A) and second metallocene-catalyzed polypropylene (RPP-B) are comprised in /or form a metallocene-catalyzed polypropylene (RPP).

In some embodiments of the polypropylene composition as described hereinabove, said first metallocene-catalyzed polypropylene (RPP-A) and second metallocene-catalyzed polypropylene (RPP-B) are comprised in or form a metallocene-catalyzed polypropylene (RPP), and wherein the polypropylene composition comprises at least 90.0 % by weight, based on the total weight of the polypropylene composition, of said metallocene-catalyzed polypropylene (RPP).

In some embodiments, the present invention concerns a polypropylene composition comprising at least 90.0 % by weight, based on the total weight of the polypropylene composition, of a metallocene-catalyzed polypropylene (RPP), wherein the metallocene-catalyzed polypropylene (RPP) comprises

(a) a first metallocene-catalyzed polypropylene (RPP-A) which is homopolymer, or a random copolymer of propylene and of a co-monomer; and

(b) a second metallocene-catalyzed polypropylene (RPP-B) which is a random copolymer of propylene and of a co-monomer;

wherein said polypropylene composition has:

- a total co-monomer content of at least 1.1 % by weight relative to the total weight of said polypropylene composition, as determined by $^{13}C$ NMR analysis, said co-monomer being an alpha-olefin different from propylene;

- a melting temperature $T_m$ of at least 130 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10; and

- a co-monomer distribution ratio $R(M_z)/R(M_n)$ higher than 0.995, wherein $R(M_z)$ is the ratio at $M_z$ of the IR signal measured at 2959 $cm^{-1}$ on the signal at 2928 $cm^{-1}$, and $R(M_n)$ is the ratio at $M_n$ of the IR signal measured at 2959 $cm^{-1}$ on the signal at 2928 $cm^{-1}$, as determined by IR-detected gel permeation chromatography and

- a xylene soluble content (XS) of at most 3.0 % by weight, preferably at most 2.5 % by weight, preferably at most 2.3 % by weight, preferably at most 2.2 % by weight.

In some embodiments of the polypropylene composition as described herein, the first metallocene-catalyzed polypropylene (RPP-A) is a random copolymer of propylene and of a co-monomer, preferably having at least 0.5 % by weight of co-monomer content, relative to the total weight of the first metallocene-catalyzed polypropylene (RPP-A), as determined by $^{13}$C NMR analysis.

In some embodiments, the composition comprises a chemical blend (in situ) of said first metallocene-catalyzed polypropylene (RPP-A) and said second metallocene-catalyzed polypropylene (RPP-B), preferably an in-situ reactor blend of said first metallocene-catalyzed polypropylene (RPP-A) and said second metallocene-catalyzed polypropylene (RPP-B).

In some embodiments, the composition comprises a physical blend of said first metallocene-catalyzed polypropylene (RPP-A) and said second metallocene-catalyzed polypropylene (RPP-B).

In some embodiments of the polypropylene composition as described herein, the co-monomer distribution ratio $R(M_z)/R(M_n)$ is at least 0.996, preferably at least 0.997, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography.

In some embodiments, the polypropylene composition has a ratio of z-average molecular weight ($M_z$) to number average molecular weight ($M_n$) [$M_z/M_n$] of at least 6.0, preferably at least 8.0, preferably at least 10.0.

In some embodiments, the polypropylene composition has a $M_w/M_n$ of at least 4.50, preferably at most 12.0, for example at most 10.0, for example $M_w/M_n$ can be ranging from 4.50 to 12.0, preferably from 4.50 to 11.5, preferably from 4.50 to 11.0, preferably from 4.50 to 10.5, preferably from 4.50 to 10.0, preferably from 4.50 to 9.50.

In some embodiments, the polypropylene composition has a $M_z/M_w$ of at least 2.10, preferably of at least 2.20, preferably of at least 2.25, preferably of at least 2.28, preferably of at least 2.30.

In some embodiments of the polypropylene composition as described herein, the melt flow index of the second metallocene-catalyzed polypropylene (RPP-B) is greater than the melt flow index of the first metallocene-catalyzed polypropylene (RPP-A); the values of melt flow index being measured according to ISO 1133:2005 Method B, condition M, at a temperature 230 °C and a 2.16 kg load.

In some embodiments of the polypropylene composition as described herein, the melt flow index of the second metallocene-catalyzed polypropylene (RPP-B) is at least 40.0 g/10 min, preferably at least 41.0 g/10 min, preferably at least 42.0 g/10 min, preferably from 40.0 to 5000 g/10 min, preferably from 40.0 to 3000 g/10 min, preferably from 40.0 to 1500 g/10 min; wherein melt flow indexes lower than 300.0 g/10 min are measured according to ISO 1133:2005 Method B, condition M, at a temperature 230 °C and a 2.16 kg load, and melt flow indexes greater than 300.0 g/10 min, are measured at a temperature 190 °C and a 2.16 kg load using a die of 1 mm.

In some embodiments of the polypropylene composition as described herein, the melt flow index of the first metallocene-catalyzed polypropylene (RPP-A), which is preferably a polypropylene random copolymer, is at most 40.0 g/10 min, preferably at most 37.0 g/10 min, preferably at most 35.0 g/10 min, preferably from 0.01 to 40.0 g/10 min, more preferably from 0.05 to 35.0 g/10 min; as measured according to ISO 1133:2005 Method B, condition M, at a temperature 230 °C and a 2.16 kg load.

In some embodiments of the polypropylene composition as described herein, the melt flow index of the first metallocene-catalyzed polypropylene (RPP-A), which is preferably a polypropylene random copolymer, is at least 0.01 g/10 min, preferably at least 0.05 g/10 min, preferably at least 0.1 g/10 min, preferably at least 0.3 g/ 10 min preferably at least 0.5 g/10 min, preferably at least 0.8 g/10 min; as measured according to ISO 1133:2005 Method B, condition M, at a temperature 230 °C and a 2.16 kg load.

In some embodiments of the polypropylene composition as described herein, said co-monomer is ethylene.

In some embodiments, the polypropylene composition has a melt flow index of at least 1.0 g/10 min, preferably of at least 1.5 g/10 min, preferably of at least 2.0 g/10 min, preferably of at least 2.5 g/10 min; as measured according to ISO 1133:2005 Method B, condition M, at a temperature 230 °C and a 2.16 kg load.

In some embodiments, the polypropylene composition has a melt flow index of at most 200 g/10 min, preferably of at most 150 g/10 min, preferably of at most 110 g/10 min, preferably of at most 100 g/10 min, preferably of at most 80.0 g/10 min, preferably of at most 60.0 g/10 min; as measured according to ISO 1133:2005 Method B, condition M, at a temperature 230 °C and a 2.16 kg load.

In some embodiments, the polypropylene composition has a melt flow index ranging from 1.0 to 200 g/10 min, preferably from 1.5 to 110 g/10 min, more preferably from 2.0 to 80.0 g/10 min, more preferably from 2.5 to 70.0 g/10 min; as measured according to ISO 1133:2005 Method B, condition M, at a temperature 230 °C and a 2.16 kg load.

In some embodiments, the polypropylene composition has a total co-monomer content of at least 1.1 % by weight, preferably of at least 1.2 % by weight, preferably of at least 1.3 % by weight, preferably of at least 1.4 % by weight, preferably of at least 1.5 % by weight, relative to the total weight of said polypropylene composition as determined by $^{13}$C NMR analysis.

In some embodiments, the polypropylene composition has a total co-monomer content of at most 5.0 % by weight, preferably of at most 4.5 % by weight, preferably of at most 4.0 % by weight, preferably of at most 3.5 % by weight, preferably of at most 3.0 % by weight, relative to the total weight of said polypropylene composition as determined

by $^{13}$C NMR analysis.

In some embodiments, the polypropylene composition has a total co-monomer content ranging from 1.1 % to 5.0 % by weight, preferably from 1.2 % to 4.5 % by weight, preferably from 1.3 % to 4.0 % by weight, preferably from 1.4 % to 3.5 % by weight, preferably from 1.5 % to3.0 % by weight, relative to the total weight of said polypropylene composition, as determined by $^{13}$C NMR analysis.

In some embodiments of the polypropylene composition as described herein, the total co-monomer content of the first metallocene-catalyzed polypropylene (RPP-A) is at least 0.5 % by weight, preferably at least 1.0 % by weight, preferably at least 1.5 % by weight, relative to the total weight of said first metallocene-catalyzed polypropylene (RPP-A), as determined by $^{13}$C NMR analysis.

In some embodiments of the polypropylene composition as described herein, the total co-monomer content of the first metallocene-catalyzed polypropylene (RPP-A) is at most 5.0 % by weight, preferably at most 4.5 % by weight, preferably at most 4.0 % by weight, preferably at most 3.5 % by weight relative to the total weight of said_first metallocene-catalyzed polypropylene (RPP-A), as determined by $^{13}$C NMR analysis.

In some embodiments of the polypropylene composition as described herein, the total co-monomer content of the first metallocene-catalyzed polypropylene (RPP-A) is ranging from 1.0 % to 5.0 % by weight, preferably from 1.0 % to 4.5 % by weight, preferably from 1.5 % to 4.0 % by weight, preferably from 1.5 % to 3.5 % by weight, relative to the total weight of said first metallocene-catalyzed polypropylene (RPP-A), as determined by $^{13}$C NMR analysis.

In some embodiments of the polypropylene composition as described herein, the total co-monomer content of the second metallocene-catalyzed polypropylene (RPP-B) is at least 1.0 % by weight, preferably at least 1.5 % by weight relative to the total weight of said second metallocene-catalyzed polypropylene (RPP-B), as determined by $^{13}$C NMR analysis.

In some embodiments of the polypropylene composition as described herein, the total co-monomer content of the second metallocene-catalyzed polypropylene (RPP-B) is at most 5.0 % by weight, preferably at most 4.5 % by weight, preferably at most 4.0 % by weight, preferably at most 3.5 % by weight, preferably at most 3.0 % by weight relative to the total weight of said second metallocene-catalyzed polypropylene (RPP-B), as determined by $^{13}$C NMR analysis.

In some embodiments of the polypropylene composition as described herein, the total co-monomer content of the second metallocene-catalyzed polypropylene (RPP-B) is at least 1.0 % by weight, preferably at least 1.5 % by weight as determined by $^{13}$C NMR analysis, preferably from 1.0 % to 5.0 % by weight, preferably from 1.0 % to 4.0 % by weight, preferably from 1.0 % to 3.0 % by weight, relative to the total weight of said second metallocene-catalyzed polypropylene (RPP-B), as determined by $^{13}$C NMR analysis.

In some embodiments of the polypropylene composition as described herein, the difference between the melting temperature $T_m$ and the crystallization temperature $T_c$ of the non-nucleated polypropylene composition ($T_m$-$T_c$) is greater than 33.0 °C.

In some embodiments of the polypropylene composition as described herein, the difference between the melting temperature Tm and the crystallization temperature Tc of the non-nucleated polypropylene composition (Tm-Tc) is lower than 38.0 °C.

In some embodiments, the polypropylene composition comprises: from 30 to 90 % by weight of the first metallocene-catalyzed polypropylene (RPP-A), preferably from 40 to 80 % by weight, preferably from 50 to 80 % by weight, preferably from 60 to 80 % by weight, preferably from 60 to 78 % by weight relative to the total weight of the composition.

In some embodiments, the polypropylene composition comprises: from 10 to 70 % by weight of the second metallocene-catalyzed polypropylene (RPP-B), preferably from 10 to 60 % by weight, preferably from 10 to 50 % by weight, preferably from 10 to 40 % by weight, preferably from 15 to 40 % by weight, preferably from 20 to 40 % by weight, preferably from 22 to 40 % by weight, relative to the total weight of the composition.

In some embodiments, the polypropylene composition comprises: from 30 to 90 % by weight of the first metallocene-catalyzed polypropylene (RPP-A), preferably from 40 to 90 % by weight, preferably from 50 to 90 % by weight, preferably from 60 to 90 % by weight, preferably from 60 to 80 % by weight, preferably from 60 to 78 % by weight, and from 10 to 70 % by weight of the second metallocene-catalyzed polypropylene (RPP-B), preferably from 10 to 60 % by weight, preferably from 10 to 50 % by weight, preferably from 10 to 40 % by weight, preferably from 20 to 40 % by weight, preferably from 22 to 40 % by weight, relative to the total weight of the composition.

In some embodiments, the polypropylene composition has a flexural modulus greater than 900 MPa, preferably greater than 1000 MPa, the flexural modulus being measured at 23 °C according to ISO 178:2011 method A.

In some embodiments, the polypropylene composition has a notched Izod impact strength of at least 2.50 kJ/m[2] as measured according to ISO 180/A1:2006 at 23 °C.

In some embodiments, the polypropylene composition comprises: from 60 to 80 % by weight, preferably from 60 to 78 % by weight, of the first metallocene-catalyzed polypropylene (RPP-A), relative to the total weight of the composition.

In some embodiments, the polypropylene composition comprises: from 20 to 40 % by weight of the second metallocene-catalyzed polypropylene (RPP-B), preferably, preferably from 22 to 40 % by weight, relative to the total weight of the composition.

In some embodiments, the polypropylene composition comprises: from 60 to 80 % by weight, preferably from 60 to 78 % by weight, of the first metallocene-catalyzed polypropylene (RPP-A), and from 20 to 40 % by weight of the second metallocene-catalyzed polypropylene (RPP-B), preferably, preferably from 22 to 40 % by weight, relative to the total weight of the composition; wherein the melt flow index of the second metallocene-catalyzed polypropylene (RPP-B) is greater than the melt flow index of the first metallocene-catalyzed polypropylene (RPP-A); the values of melt flow index being measured according to ISO 1133:2005 Method B, condition M, at a temperature 230 °C and a 2.16 kg load.

In some embodiments, the polypropylene composition comprises: from 20 to 40 % by weight of the second metallocene-catalyzed polypropylene (RPP-B), preferably, preferably from 22 to 40 % by weight, relative to the total weight of the composition; wherein the melt flow index of the second metallocene-catalyzed polypropylene (RPP-B) is at least 40.0 g/10 min, preferably at least 41.0 g/10 min, preferably at least 42.0 g/10 min, preferably from 40.0 to 5000 g/10 min, preferably from 40.0 to 3000 g/10 min, preferably from 40.0 to 1500 g/10 min, preferably from 41.0 to 1000 g/10 min; preferably from 41.0 to 700 g/10 min; wherein melt flow indexes lower than 300.0 g/10 min are measured according to ISO 1133:2005 Method B, condition M, at a temperature 230 °C and a 2.16 kg load, and melt flow indexes greater than 300.0 g/10 min, are measured at a temperature 190 °C and a 2.16 kg load using a die of 1 mm.

In some embodiments, the polypropylene composition comprises: from 60 to 80 % by weight, preferably from 60 to 78 % by weight, of the first metallocene-catalyzed polypropylene (RPP-A), relative to the total weight of the composition; wherein the melt flow index of the first metallocene-catalyzed polypropylene (RPP-A), which is preferably a polypropylene random copolymer, is at most 40.0 g/10 min, preferably at most 37.0 g/10 min, preferably at most 35.0 g/10 min, preferably from 0.01 to 40.0 g/10 min, more preferably from 0.05 to 35.0 g/10 min; preferably at least 0.1 g/10 min, preferably at least 0.3 g/ 10 min preferably at least 0.5 g/10 min, preferably at least 0.8 g/10 min; as measured according to ISO 1133:2005 Method B, condition M, at a temperature 230 °C and a 2.16 kg load.

The present invention also concerns a process for the preparation of the polypropylene composition as described herein comprising the steps of:

(i) providing a first metallocene-catalyzed polypropylene (RPP-A) which is homopolymer, or a random copolymer of propylene and of a co-monomer; and

(ii) providing a second metallocene-catalyzed polypropylene (RPP-B) which is a random copolymer of propylene and of a co-monomer;

(iii) and obtaining a metallocene-catalyzed polypropylene (RPP) comprising said first and second metallocene-catalyzed polypropylene, wherein steps (i) and (ii) are carried out by polymerizing propylene and, if any, the co-monomer in the presence of at least one metallocene catalyst;

said polypropylene composition having:

- a total co-monomer content of at least 1.1 % by weight relative to the total weight of said polypropylene composition, as determined by $^{13}$C NMR analysis, said co-monomer being an alpha-olefin different from propylene;

- a melting temperature $T_m$ of at least 130 °C, measured by DSC;

- a crystallization temperature $T_c$ of at least 95.0 °C, measured by DSC;

- a ratio of weight average molecular weight $(M_w)$ to number average molecular weight $(M_n)$ $[M_w/M_n]$ of at least 4.50;

- a ratio of z-average molecular weight $(M_z)$ to weight average molecular weight $(M_w)$ $[M_z/M_w]$ of at least 2.10; and

- a co-monomer distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography and

- a xylene soluble content (XS) of at most 3.0 % by weight.

In some embodiments of the process as described herein, step (iii) is carried out by blending said first metallocene-catalyzed polypropylene (RPP-A) and said second metallocene-catalyzed polypropylene (RPP-B) or by mixing said first metallocene-catalyzed polypropylene (RPP-A) to the second metallocene-catalyzed polypropylene (RPP-B) simultaneously to the preparation thereof.

In some embodiments of the process as described herein, said metallocene-catalyzed polypropylene (RPP) of step (iii) is obtained by chemical blending of said first metallocene-catalyzed polypropylene (RPP-A) and second metallocene-catalyzed polypropylene (RPP-B), preferably by mixing said first metallocene-catalyzed polypropylene (RPP-A) to the second metallocene-catalyzed polypropylene (RPP-B) simultaneously to the preparation thereof.

In some embodiments of the process as described herein, the metallocene-catalyzed polypropylene (RPP) is prepared by a process comprising the steps of

(i) polymerizing propylene, optionally hydrogen, and optionally a co-monomer in a first reactor in the presence of the metallocene catalyst, thereby obtaining said first metallocene-catalyzed polypropylene (RPP-A),

(ii) transferring said first metallocene-catalyzed polypropylene (RPP-A) and optionally unreacted comonomers of the first reactor in a second reactor, and

(iii) polymerizing in said second reactor and in the presence of said first metallocene-catalyzed polypropylene (RPP-A), propylene and a co-monomer, optionally hydrogen, thereby obtaining the second metallocene-catalyzed polypropylene (RPP-B), said first metallocene-catalyzed polypropylene (RPP-A) and said second metallocene-catalyzed polypropylene (RPP-B) forming the metallocene-catalyzed polypropylene (RPP).

In some embodiments of the process as described herein, the metallocene-catalyzed polypropylene (RPP) is prepared by a process comprising the steps of

(i) polymerizing propylene and a co-monomer, and optionally hydrogen, in a first reactor in the presence of the metallocene catalyst, thereby obtaining said first metallocene-catalyzed polypropylene (RPP-A),
(ii) transferring said first metallocene-catalyzed polypropylene (RPP-A) and unreacted comonomers of the first reactor in a second reactor, and
(iii) polymerizing in said second reactor and in the presence of said first metallocene-catalyzed polypropylene (RPP-A), propylene and a co-monomer, optionally hydrogen, thereby obtaining the second metallocene-catalyzed polypropylene (RPP-B), said first metallocene-catalyzed polypropylene (RPP-A) and said second metallocene-catalyzed polypropylene (RPP-B) forming the metallocene-catalyzed polypropylene (RPP).

In some embodiments of the process as described herein, step (iii) is carried out by physically blending said first metallocene-catalyzed polypropylene (RPP-A) and said second metallocene-catalyzed polypropylene (RPP-B), in some embodiments, said physical blending can comprise the blending of polypropylene fluff or pellets of said first and second polypropylene, or the blending of solutions of said first and second polypropylene.

Disclosed is also a polypropylene composition comprising the metallocene-catalyzed polypropylene (RPP) prepared according to the process as described herein.

Disclosed is also a polypropylene composition comprising at least 90 % by weight of the metallocene-catalyzed polypropylene (RPP) prepared according to the process as described herein.

Disclosed is also a polypropylene composition as described herein obtained by the process as described herein.

Disclosed is also an article comprising a polypropylene composition as described herein, or obtained according to the process as described herein.

Disclosed is also an article, comprising at least 90.0 % by weight of the polypropylene composition as described herein, or obtained according to the process as described herein, preferably, the article comprises at least 95.0 % by weight of the polypropylene composition, more preferably at least 97.0 % by weight, still more preferably at least 98.0 % by weight. It is especially preferred that the article consists of the polypropylene composition.

Disclosed is also the use of a polypropylene composition as described herein, or obtained according to the process as described herein, for the production of films or injection or blow moulded articles.

Disclosed is also a polypropylene composition comprising:

(a) a first metallocene-catalyzed polypropylene (RPP-A) which is homopolymer, or a random copolymer of propylene and of a co-monomer; and
(b) a second metallocene-catalyzed polypropylene (RPP-B) which is a random copolymer of propylene and of a co-monomer.

Disclosed is also a polypropylene composition comprising

(a) a first metallocene-catalyzed polypropylene (RPP-A) which is a random copolymer of propylene and of a co-monomer; and

(b) a second metallocene-catalyzed polypropylene (RPP-B) which is a random copolymer of propylene and of a co-monomer.

Preferably, the melting temperature $T_m$ of the non-nucleated composition is at least 130 °C, as measured by DSC;

Preferably, the crystallization temperature $T_c$ of the non-nucleated composition is at least 95.0 °C, as measured by DSC.

The first metallocene-catalyzed polypropylene (RPP-A) can be a homopolymer of propylene or a random copolymer of propylene and of a co-monomer. As used herein, the term homopolymer refers to a polymer that has less than 0.1 % by weight, preferably less than 0.05 % by weight, more preferably less than 0.01 % by weight and most preferably less than 0.005 % by weight, of alpha-olefins other than propylene in the polymer relative to the total weight of the homopolymer, as determined by $^{13}$C NMR analysis. Most preferred, no other alpha-olefins are detectable.

Preferably, the first metallocene-catalyzed polypropylene (RPP-A) is a metallocene-catalyzed random copolymer of propylene and of a co-monomer, having at least 0.5 % by weight of co-monomer content, preferably at least 0.7 % by weight, preferably at least 1.3 % by weight, preferably at least 1.5 % by weight, preferably from 0.5 % to 5.0 % by weight, preferably from 0.7 % to 5.0 % by weight, preferably from 1.0 % to 5.0 % by weight, preferably from 1.0 % to 4.5 % by weight, preferably from 1.0 % to 3.5 % by weight, preferably from 1.5 % to 2.8 % by weight, preferably from 1.5 % to 2.5 % by weight, relative to the total weight of said first metallocene-catalyzed polypropylene (RPP-A), as determined by $^{13}$C NMR analysis.

The term "random" indicates that the co-monomers of the propylene copolymer are randomly distributed within the propylene copolymer. The term random is understood according to IUPAC (Glossary of basic terms in polymer science; IUPAC recommendations 1996).

The co-monomer is an alpha-olefin different from propylene. Preferably, the co-monomer is selected from the group consisting of ethylene, 1-butene, 1-pentene, 1-hexene and 4-methyl-1-pentene. More preferably, the co-monomer is selected from the group consisting of ethylene, 1-butene and 1-hexene. Even more preferably, the co-monomer is ethylene. Preferably, the first metallocene-catalyzed polypropylene (RPP-A) is a metallocene-catalyzed random copolymer of propylene and ethylene as co-monomer.

Preferably, the melt flow index $MI_2$ of the first metallocene-catalyzed polypropylene (RPP-A), which is preferably a polypropylene random copolymer, is at least 0.10 g/10 min, preferably at least 0.20 g/10 min, preferably at least 0.50 g/10 min, preferably at least 0.70 g/ 10 min preferably at least 0.8 g/10 min; as measured according to ISO 1133:2005 Method B, condition M, at a temperature 230 °C and a 2.16 kg load.

Preferably, the first metallocene-catalyzed polypropylene (RPP-A), which is preferably a polypropylene random copolymer, has a $M_w/M_n$ of at least 2.00, preferably at least 2.10, preferably at least 2.20, preferably at least 2.30, preferably at least 2.40, preferably at least 2.50, preferably at least 2.60, for example at most 6.00, for example $M_w/M_n$ can be ranging from 2.00 to 6.00, preferably from 2.00 to 5.00, preferably from 2.00 to 4.00, preferably from 2.50 to 3.50.

Preferably, the first metallocene-catalyzed polypropylene (RPP-A), which is preferably a polypropylene random copolymer, has a $M_z/M_n$ of at least 4.0, preferably at least 5.0, preferably at least 5.5, for example at most 10.0, for example at most 8.0, for example at most 7.5.

The second metallocene-catalyzed polypropylene (RPP-B) is a metallocene-catalyzed random copolymer of propylene and of a co-monomer. Preferably, the co-monomer is ethylene. Preferably, the second first metallocene-catalyzed polypropylene (RPP-B) is a metallocene-catalyzed random copolymer of propylene and ethylene as co-monomer.

Preferably, the melt flow index of the second metallocene-catalyzed polypropylene (RPP-B) is greater than the melt flow index of the first metallocene-catalyzed polypropylene (RPP-A); the values of melt flow index being measured according to ISO 1133:2005 Method B, condition M, at a temperature 230 °C and a 2.16 kg load.

Preferably, the melt flow index of the second metallocene-catalyzed polypropylene (RPP-B) is at least 40.0 g/10 min, preferably at least 40.5 g/10 min, preferably at least 41.0 g/10 min, preferably at least 41.5 g/10 min; preferably from 40.0 to 5000 g/10 min, preferably from 40.5 to 3000 g/10 min; preferably from 41.0 to 1500 g/10 min, preferably from 41.0 to 1000 g/10 min; preferably from 41.0 to 700 g/10 min; wherein melt flow indexes lower than 300.0 g/10 min are measured according to ISO 1133:2005 Method B, condition M, at a temperature 230 °C and a 2.16 kg load, and melt flow indexes greater than 300.0 g/10 min, are measured at a temperature 190 °C and a 2.16 kg load using a die of 1 mm.

Preferably, the total co-monomer content of the second metallocene-catalyzed polypropylene (RPP-B) is at least 1.0 % by weight, preferably at least 1.5 % by weight, preferably from 1.0 % to 5.0 % by weight, preferably from 1.0 % to 4.5 % by weight, preferably from 1.0 % to 3.5 % by weight, preferably from 1.0 % to 3.0 % by weight, relative to the total weight of said second metallocene-catalyzed polypropylene (RPP-B), as determined by $^{13}$C NMR analysis.

In some preferred embodiment, the polypropylene composition comprises a metallocene-catalyzed polypropylene (RPP), wherein the metallocene-catalyzed polypropylene (RPP) comprises

(a) a first metallocene-catalyzed polypropylene (RPP-A) which is homopolymer, or a random copolymer of propylene and of a co-monomer; and

(b) a second metallocene-catalyzed polypropylene (RPP-B) which is a random copolymer of propylene and of a co-monomer;

wherein said polypropylene composition has:

- a total co-monomer content of at least 1.1 % by weight relative to the total weight of said polypropylene composition, as determined by $^{13}$C NMR analysis, said co-monomer being an alpha-olefin different from propylene;

- a melting temperature $T_m$ of at least 130 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10, preferably at least 2.20; and

- a co-monomer distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography and

- a xylene soluble content (XS) of at most 3.0 % by weight, preferably at most 2.5 % by weight, preferably at most 2.3 % by weight, preferably at most 2.2 % by weight.

In some preferred embodiment, the polypropylene composition comprises a metallocene-catalyzed polypropylene (RPP), preferably at least 90.0 % by weight, based on the total weight of the polypropylene composition, of a metallocene-catalyzed polypropylene (RPP), wherein the metallocene-catalyzed polypropylene (RPP) comprises

(a) a first metallocene-catalyzed polypropylene (RPP-A) which is homopolymer, or a random copolymer of propylene and of a co-monomer; and

(b) a second metallocene-catalyzed polypropylene (RPP-B) which is a random copolymer of propylene and of a co-monomer;

wherein said polypropylene composition has:

- a total co-monomer content of at least 1.1 % by weight relative to the total weight of said polypropylene composition, as determined by $^{13}$C NMR analysis, said co-monomer being an alpha-olefin different from propylene;

- a melting temperature $T_m$ of at least 130 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10, preferably at least 2.20; and

- a co-monomer distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography and

- a xylene soluble content (XS) of at most 3.0 % by weight, , preferably at most 2.5 % by weight, preferably at most 2.3 % by weight, preferably at most 2.2 % by weight.

The co-monomer is an alpha-olefin different from propylene. Preferably, the co-monomer is selected from the group consisting of ethylene, 1-butene, 1-pentene, 1-hexene and 4-methyl-1-pentene. More preferably, the co-monomer is selected from the group consisting of ethylene, 1-butene and 1-hexene. Even more preferably, the co-monomer is ethylene.

Preferably, the present invention provides a polypropylene composition comprising:
In some preferred embodiment, the polypropylene composition comprises

(a) a first metallocene-catalyzed polypropylene (RPP-A) which is homopolymer, or a random copolymer of propylene and ethylene; and

(b) a second metallocene-catalyzed polypropylene (RPP-B) which is a random copolymer of propylene and ethylene;

wherein said polypropylene composition has:

- a total ethylene content of at least 1.1 % by weight relative to the total weight of said polypropylene composition, as determined by $^{13}C$ NMR analysis;

- a melting temperature $T_m$ of at least 130 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10, preferably at least 2.20; and

- an ethylene distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography and

- a xylene soluble content (XS) of at most 3.0 % by weight, preferably at most 2.5 % by weight, preferably at most 2.3 % by weight, preferably at most 2.2 % by weight.

In some preferred embodiment, the polypropylene composition comprises a metallocene-catalyzed polypropylene (RPP), preferably at least 90.0 % by weight, based on the total weight of the polypropylene composition, of a metallocene-catalyzed polypropylene (RPP), wherein the metallocene-catalyzed polypropylene (RPP) comprises

(a) a first metallocene-catalyzed polypropylene (RPP-A) which is homopolymer, or a random copolymer of propylene and ethylene; and

(b) a second metallocene-catalyzed polypropylene (RPP-B) which is a random copolymer of propylene and ethylene;

wherein said polypropylene composition has:

- a total ethylene content of at least 1.1 % by weight relative to the total weight of said polypropylene composition, as determined by $^{13}C$ NMR analysis;

- a melting temperature $T_m$ of at least 130 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10, preferably at least 2.20; and

- an ethylene distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the

signal at 2928 cm$^{-1}$, as determined by IR-detected gel permeation chromatography and

- a xylene soluble content (XS) of at most 3.0 % by weight, preferably at most 2.5 % by weight, preferably at most 2.3 % by weight, preferably at most 2.2 % by weight.

Preferably, said polypropylene composition according to the present invention may have a melting temperature $T_m$ ranging from 130 °C and 170 °C, said melting temperature being measured by DSC.

Preferably, the difference between the melting temperature $T_m$ and the crystallization temperature $T_c$ of the non-nucleated polypropylene composition ($T_m$-$T_c$) is greater than 33.0 °C, preferably greater than 33.5 °C, preferably greater than 34.0 °C, and preferably lower than 38.0 °C.

Preferably, said polypropylene composition may have a molecular weight distribution, defined as $M_w/M_n$, of at least 4.50, for example $M_w/M_n$ can be ranging from 4.50 to 10.0, preferably from 4.50 to 9.00, preferably from 4.50 to 8.00. Molecular weights can be determined by size exclusion chromatography (SEC), frequently also referred to as gel permeation chromatography (GPC), as described in detail in the example section.

Preferably, said polypropylene composition may have a melt flow index ranging from 1.0 to 150 g/10 min, preferably from 1.5 to 100 g/10 min, more preferably from 2.0 to 85.0 g/10 min, more preferably from 2.5 to 75.0 g/10 min; as measured according to ISO 1133:2005 Method B, condition M, at a temperature 230 °C and a 2.16 kg load.

As mentioned above, the polypropylene composition has a total co-monomer content of at least 1.1 % by weight relative to the total weight of said polypropylene composition. Preferably, the total co-monomer content is at least 1.2 % by weight, even more preferably at least 1.5 % by weight. Preferably, the co-monomer content is at most 6.0 % by weight, more preferably at most 5.0 % by weight, even more preferably 4.0 % by weight, most preferably at most 3.5 % by weight, most preferably at most 3.0 % by weight. The co-monomer content of the polypropylene composition can be determined by $^{13}$C NMR analysis as described in detail in the examples.

Preferably the co-monomer is ethylene, and the polypropylene composition has a total ethylene content of at least 1.1 % by weight relative to the total weight of said polypropylene composition. Preferably, the total ethylene content is at least 1.2 % by weight, even more preferably at least 1.5 % by weight. Preferably, the ethylene content is at most 6.0 % by weight, more preferably at most 5.0 % by weight, even more preferably 4.0 % by weight, most preferably at most 3.5 % by weight, most preferably at most 3.0 % by weight, most preferably at most 2.5 % by weight. The ethylene content of the polypropylene composition can be determined by $^{13}$C NMR analysis as described in detail in the examples.

In some preferred embodiment, the polypropylene composition comprises a metallocene-catalyzed polypropylene (RPP), preferably at least 90.0 % by weight, based on the total weight of the polypropylene composition, of a metallocene-catalyzed polypropylene (RPP), wherein the metallocene-catalyzed polypropylene (RPP) comprises

(a) a first metallocene-catalyzed polypropylene (RPP-A) which is homopolymer, or a random copolymer of propylene and ethylene; and
(b) a second metallocene-catalyzed polypropylene (RPP-B) which is a random copolymer of propylene and ethylene;

wherein said polypropylene composition has:

- a total ethylene content of at least 1.1 % by weight relative to the total weight of said polypropylene composition, as determined by $^{13}$C NMR analysis;

- a melting temperature $T_m$ of at least 130 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10, preferably at least 2.20; and

- an ethylene distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography and

- a xylene soluble content (XS) of at most 3.0 % by weight, preferably at most 2.5 % by weight, preferably at most 2.3 % by weight, preferably at most 2.2 % by weight;

wherein said composition comprises from 20 to 40 % by weight of the second metallocene-catalyzed polypropylene (RPP-B), preferably, preferably from 22 to 40 % by weight, relative to the total weight of the composition; wherein the melt flow index of the second metallocene-catalyzed polypropylene (RPP-B) is greater than the melt flow index of the first metallocene-catalyzed polypropylene (RPP-A); the values of melt flow index being measured according to ISO 1133:2005 Method B, condition M, at a temperature 230 °C and a 2.16 kg load.

In some preferred embodiment, the polypropylene composition comprises a metallocene-catalyzed polypropylene (RPP), preferably at least 90.0 % by weight, based on the total weight of the polypropylene composition, of a metallocene-catalyzed polypropylene (RPP), wherein the metallocene-catalyzed polypropylene (RPP) comprises

(a) a first metallocene-catalyzed polypropylene (RPP-A) which is homopolymer, or a random copolymer of propylene and ethylene; and

(b) a second metallocene-catalyzed polypropylene (RPP-B) which is a random copolymer of propylene and ethylene;

wherein said polypropylene composition has:

- a total ethylene content of at least 1.1 % by weight relative to the total weight of said polypropylene composition, as determined by $^{13}$C NMR analysis;

- a melting temperature $T_m$ of at least 130 °C, measured by DSC;

- a crystallization temperature $T_c$ of at least 95.0 °C, measured by DSC;

- a ratio of weight average molecular weight ($M_w$) to number average molecular weight ($M_n$) [$M_w/M_n$] of at least 4.50;

- a ratio of z-average molecular weight ($M_z$) to weight average molecular weight ($M_w$) [$M_z/M_w$] of at least 2.10, preferably at least 2.20; and

- an ethylene distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography and

- a xylene soluble content (XS) of at most 3.0 % by weight, preferably at most 2.5 % by weight, preferably at most 2.3 % by weight, preferably at most 2.2 % by weight;

wherein said composition comprises from 20 to 40 % by weight of the second metallocene-catalyzed polypropylene (RPP-B), preferably, preferably from 22 to 40 % by weight, relative to the total weight of the composition; wherein the melt flow index of the second metallocene-catalyzed polypropylene (RPP-B) is at least 40.0 g/10 min, preferably at least 41.0 g/10 min, preferably at least 42.0 g/10 min, preferably from 40.0 to 5000 g/10 min, preferably from 40.0 to 3000 g/10 min, preferably from 40.0 to 1500 g/10 min, preferably from 41.0 to 1000 g/10 min; preferably from 41.0 to 700 g/10 min; wherein melt flow indexes lower than 300.0 g/10 min are measured according to ISO 1133:2005 Method B, condition M, at a temperature 230 °C and a 2.16 kg load, and melt flow indexes greater than 300.0 g/10 min, are measured at a temperature 190 °C and a 2.16 kg load using a die of 1 mm.

In some embodiments, said composition comprises from 60 to 80 % by weight, preferably from 60 to 78 % by weight, of the first metallocene-catalyzed polypropylene (RPP-A), relative to the total weight of the composition; wherein the melt flow index of the first metallocene-catalyzed polypropylene (RPP-A), which is preferably a polypropylene random copolymer, is at most 40.0 g/10 min, preferably at most 37.0 g/10 min, preferably at most 35.0 g/10 min, preferably from 0.01 to 40.0 g/10 min, more preferably from 0.05 to 35.0 g/10 min; preferably at least 0.1 g/10 min, preferably at least 0.3 g/ 10 min preferably at least 0.5 g/10 min, preferably at least 0.8 g/10 min; as measured according to ISO 1133:2005 Method B, condition M, at a temperature 230 °C and a 2.16 kg load.

Preferably, the polypropylene composition comprises at least 90 % by weight of said first polypropylene (RPP-A) and second polypropylene (RPP-B) (forming a metallocene-catalyzed polypropylene (RPP)) relative to the total weight of said polypropylene composition, preferably at least 95 % by weight, preferably at least 97 % by weight, most preferably at least 99 % by weight relative to the total weight of said polypropylene composition.

Preferably, the haze of the non-nucleated polypropylene composition is less than 70 %, more preferably less than 65 %, preferably less than 60 %, preferably less than 55 %, the haze being determined according to ISO 14782:1999.

In some embodiments, the polypropylene composition can comprise at least one additive commonly employed in the art, such as additives selected from the group consisting of nucleating agents, antistatic agents, processing aids and blends of any of these, such as a blend of nucleating agent(s) and antistatic agent(s) or a blend of nucleating agent(s) and processing aid(s) or a blend of antistatic agent(s) and processing aid(s) or a blend of all three. Examples of nucleating agents, antistatic agents and processing aids are described in WO 2012/072776 (page 11, line 4 - page 16, line 16).

In some embodiments, the polypropylene composition may also comprise further additives, such as by way of example, antioxidants, plasticizers, stabilizing agents (against heat, light, U.V.), acid scavengers, lubricants, antistatic agents, fillers, nucleating agents, clarifying agents, antistatic and water repellant agents, colorants, etc. An overview of such additives may be found in Plastics Additives Handbook, ed. H. Zweifel, 5th edition, 2001, Hanser Publishers.

In some embodiments, the polypropylene composition may comprise one or more nucleating agents. The nucleating agent can be any of the nucleating agents known to the skilled person. It is, however, preferred that the nucleating agent be selected from the group consisting of sorbitol acetals, talc, carboxylate salts, phosphate ester salts, substituted benzene tricarboxamides and polymeric nucleating agents, as well as blends thereof. Non-limiting examples of sorbitol acetals are dibenzylidene sorbitol (DBS); such as 1,3:2,4 dibenzylidene sorbitol); $C_1$-$C_8$-alkyl-substituted dibenzylidene sorbitol such as bis(p-methyl-dibenzylidene sorbitol) (MDBS), bis(p-ethyl-dibenzylidene sorbitol), bis(3,4-dimethyl-dibenzylidene sorbitol) (DMDBS), and bis(4-propylbenzylidene) propyl sorbitol; or substituted nonitol-derivatives, such as 1,2,3,-trideoxy-4,6:5,7-bis-O-[(4-propylphenyl)methylene]-nonitol. Non-limiting examples of carboxylate salts which can be used as nucleating agents can be organocarboxylic acid salts. Particular examples are sodium benzoate and lithium benzoate. The organocarboxylic acid salts may also be alicyclic organocarboxylic acid salts, preferably bicyclic organodicarboxylic acid salts and more preferably a bicyclo[2.2.1]heptane dicarboxylic acid salt. Examples of phosphate ester salts are salts of 2,2'-methylene-bis-(4,6-di-tert-butylphenyl)phosphate.

While it is clear to the skilled person that the amount of nucleating agent to be added depends upon its crystallization efficiency, the nucleating agent or the blend of nucleating agents can be present in the polypropylene composition in an amount of at least 50 ppm by weight based on the total weight of the composition, preferably at least 100 ppm by weight. It is present in an amount of at most 10000 ppm by weight, preferably of at most 5000 ppm by weight, more preferably of at most 4000 ppm by weight.

The first metallocene-catalyzed polypropylene (RPP-A) and second metallocene-catalyzed polypropylene (RPP-B) are produced by polymerization of propylene and one or more optional co-monomers, optionally in the presence of hydrogen, in the presence of one or more metallocene-based catalytic systems, preferably comprising one or more metallocenes, a support and one or more activating agent. Such metallocene-based catalytic systems are known to the person skilled in the art and need not be explained in detail.

The term "metallocene catalyst" or "metallocene" for short is used herein to describe any transition metal complexes comprising metal atoms bonded to one or more ligands. The preferred metallocene catalysts are compounds of Group IV transition metals of the Periodic Table such as titanium, zirconium, hafnium, etc., and have a coordinated structure with a metal compound and ligands composed of one or two groups of cyclopentadienyl, indenyl, fluorenyl or their derivatives.

Preferably the metallocene catalyst comprises a bridged metallocene component, an activating agent and optionally a support.

The metallocene component used to prepare the polypropylene can be any bridged metallocene known in the art. Preferably it is a metallocene represented by the following general formula.

$$-R^1(C^A)(C^A)MX^1X^2 \qquad (I)$$

wherein

- each $C^A$ is independently cyclopentadienyl, indenyl, tetrahydroindenyl or fluorenyl, each $C^A$ being optionally substituted by one or more $R^2$;

- the bridge $R^1$ is -$(CR^3R^4)_p$- or -$(SiR^3R^4)_p$- with p = 1 or 2, preferably it is -$(SiR^{10}R^{11})$-;

- M is a metal selected from Ti, Zr and Hf, preferably it is Zr;
  $X^1$ and $X^2$ are independently selected from the group consisting of halogen, hydrogen, $C_1$-$C_{10}$ alkyl, $C_6$-$C_{15}$ aryl, alkylaryl with $C_1$-$C_{10}$ alkyl and $C_6$-$C_{15}$ aryl;

- each $R^2$, $R^3$, and $R^4$ are each independently selected from the group consisting of hydrogen, $C_1$-$C_{10}$ alkyl, $C_5$-$C_7$ cycloalkyl, $C_6$-$C_{15}$ aryl, alkylaryl with $C_1$-$C_{10}$ alkyl and $C_6$-$C_{15}$ aryl, or any two neighboring R may form a cyclic saturated or non-saturated $C_4$-$C_{10}$ ring; each of said alkyl, cycloalkyl, aryl, alkylaryl optionally contains one or more heteroatoms from groups 14-16; each $R^2$, $R^3$, and $R^4$, may in turn be substituted, for example by one or more halogen, such as fluoro, or chloro. Such heteroatom is preferably O, N or S, preferably O.

The preferred metallocene components are represented by the general formula (I), wherein

- the bridge $R^1$ is $SiR^3R^4$;

  M is Zr;

  $X^1$ and $X^2$ are independently selected from the group consisting of halogen, hydrogen, and $C_1$-$C_{10}$ alkyl; and

- each $C^A$ is indenyl of the general formula $C_9R^5R^6R^7R^8R^9$, wherein $R^5$, $R^6$, $R^7$, $R^8$, and $R^9$, are each independently selected from the group consisting of hydrogen, $C_1$-$C_{10}$ alkyl, $C_5$-$C_7$ cycloalkyl, $C_6$-$C_{15}$ aryl, and alkylaryl with $C_1$-$_{10}$ alkyl and $C_6$-$C_{15}$ aryl, or any two neighboring R may form a cyclic saturated or non-saturated $C_4$-$C_{10}$ ring; each of said alkyl, cycloalkyl, aryl, alkylaryl optionally contains one or more heteroatoms from groups 14-16; each $R^5$, $R^6$, $R^7$, $R^8$, and $R^9$, may in turn be substituted, for example by one or more halogen, such as fluoro, or chloro. Such heteroatom is preferably O, N or S, preferably O.

$R^3$ and $R^4$ are each independently selected from the group consisting of $C_1$-$C_{10}$ alkyl, $C_5$-$C_7$ cycloalkyl, and $C_6$-$C_{15}$ aryl, or $R^{10}$ and $R^{11}$ may form a cyclic saturated or non-saturated $C_4$-$C_{10}$ ring; each of said alkyl, cycloalkyl, aryl, optionally contains one or more heteroatoms from groups 14-16; each $R^3$, and $R^4$, may in turn be substituted, for example by one or more halogen, such as fluoro, or chloro. Such heteroatom is preferably O, N or S, preferably O.

Particularly suitable metallocenes are those having $C_2$-symmetry.

Non-limiting examples of particularly suitable metallocenes are:
methyl(cyclohexyl)silanediyl-bis[(2-methyl-4-(4-tert-butylphenyl)indenyl]zirconium dichloride; dimethylsilanediyl-bis(cyclopentadienyl)zirconium dichloride; dimethylsilanediyl-bis(2-methylcyclopentadienyl)zirconium dichloride; dimethylsilanediyl-bis(3-methyl-cyclopentadienyl)zirconium dichloride; dimethylsilanediyl-bis(2-tert-butyl-cyclopentadienyl)zirconium dichloride; dimethylsilanediyl-bis(3-tert-butyl-cyclopentadienyl)zirconium dichloride; dimethylsilanediyl-bis(2-tert-butyl-5-methyl-cyclopentadienyl)zirconium dichloride; dimethylsilanediyl-bis(3-tert-butyl-5-methyl-cyclopentadienyl)zirconium dichloride; dimethylsilanediyl-bis(2,4-dimethyl-cyclopentadienyl)zirconium dichloride; dimethylsilanediyl-bis(indenyl)zirconium dichloride; dimethylsilanediyl-bis(2-methyl-indenyl)zirconium dichloride; dimethylsilanediyl-bis(3-methylindenyl)zirconium dichloride; dimethylsilanediyl-bis(2-isopropyl-indenyl)zirconium; dimethylsilanediyl-bis(3-isopropyl-indenyl)zirconium dichloride; dimethylsilanediyl-bis(2-tert-butyl-indenyl)zirconium dichloride; dimethylsilanediyl-bis(3-tert-butyl-indenyl)zirconium dichloride; dimethylsilanediyl-bis(4,7-dimethyl-indenyl)zirconium dichloride; dimethylsilanediyl-bis(2,7-dimethyl-4-isoproyl-indenyl)zirconium dichloride; dimethylsilanediyl-bis(2-methyl-4,6-diisoproyl-indenyl)zirconium dichloride; dimethylsilanediyl-bis(tetrahydroindenyl)zirconium dichloride; dimethylsilanediyl-bis(benzindenyl)zirconium dichloride; dimethylsilanediyl-bis(2-methyl-4,5-benzindenyl)zirconium dichloride; dimethylsilanediyl-bis(2-ethyl-4,5-benzindenyl)zirconium dichloride; dimethylsilanediyl-bis(3,3'-2-methyl-benzindenyl)zirconium dichloride; dimethylsilanediyl-bis(4-phenyl-indenyl)zirconium dichloride; dimethylsilanediyl-bis(2-methyl-4-phenyl-indenyl)zirconium dichloride; dimethylsilanediyl-bis(2-ethyl-4-phenyl-indenyl)zirconium dichloride; dimethylsilanediyl-bis(2-methyl-4-isopropyl-indenyl)zirconium dichloride; dimethylsilanediylbis(2-methyl-4-[3',5'-dimethylphenyl]indenyl)zirconium dichloride; dimethylsilanediylbis(2-methyl-4-[4'-tert-butyl-phenyl]indenyl)zirconium dichloride; diethylsilanediylbis(2-methyl-4-[4'-lert-butylphenyl]indenyl)-zirconium dichloride; dimethylsilanediylbis(2-ethyl-4-[4'-tert-butylphenyl]indenyl)zirconium dichloride; dimethylsilanediylbis(2-propyl-4-[4'-tert-butylphenyl]indenyl)zirconium dichloride; dimethylsilanediylbis(2-isopropyl-4-[4'-tert-butylphenyl]indenyl)zirconium dichloride; dimethylsilanediylbis(2-n-butyl-4-[4'-tert-butylphenyl]indenyl)zirconium dichloride; dimethylsilanediylbis(2-hexyl-4-[4'-tert-butylphenyl]indenyl)zirconium dichloride; ethylene-bis(indenyl)zirconium dichloride; ethylene-bis(tetrahydroindenyl)zirconium dichloride; and isopropylidene-(3-tert-butyl-5-methyl-cyclopentadienyl)(fluorenyl) zirconium dichloride.

The preferred metallocene component to produce the inventive polypropylene are dimethylsilyl-bridged bis(indenyl)zirconium dichloride, and among them dimethylsilyl bridged-bis(indenyl)zirconium dichloride wherein indenyl is substituted, such as: methyl(cyclohexyl)silanediyl-bis[(2-methyl-4-(4-tert-butylphenyl)indenyl]zirconium dichloride, dimethylsilanediyl-bis(2-methyl-indenyl)zirconium dichloride; dimethylsilanediyl-bis(tetrahydroindenyl)zirconium dichloride; dimethylsilanediyl-bis(benzindenyl)zirconium dichloride; dimethylsilanediyl-bis(4-phenyl-indenyl)zirconium dichloride; and dimethylsilanediyl-bis(2-methyl-4-phenyl-indenyl)zirconium dichloride.

The metallocene may be supported according to any method known in the art. In the event it is supported, the support used in the present invention can be any organic or inorganic solid, particularly porous supports such as talc, inorganic oxides, clays and clay minerals, ion-exchanged layered compounds, diatomaceous earth compounds, zeolites or a resinous support material, such as a polyolefin, for example. Preferably, the support material is an inorganic oxide in its finely divided form. Specific inorganic oxides include silica, alumina, magnesia, titania and zirconia, for example. Preferably, the inorganic support may comprise silica and/or alumina, the silica can be titanated. The inorganic support may comprise from 10 to 100 % by weight of silica and/or preferably from 10 to 100 % by weight of alumina.

In some embodiments, alumoxane is used as an activating agent. As used herein, the term "alumoxane" and "aluminoxane" are used interchangeably, and refer to a substance, which is capable of activating the metallocene catalyst. In an embodiment, alumoxanes comprise oligomeric linear and/or cyclic alkyl alumoxanes. In a further embodiment, the alumoxane has formula (II) or (III):

$$R^a\text{-}(Al(R^a)\text{-}O)_x\text{-}AlR^a_2 \text{ (II) for oligomeric, linear alumoxanes; or}$$

$$(\text{-}Al(R^a)\text{-}O\text{-})_y \text{ (III) for oligomeric, cyclic alumoxanes}$$

wherein x is 1-40, and preferably 10-20;

wherein y is 3-40, and preferably 3-20; and

wherein each $R^a$ is independently selected from a $C_1$-$C_8$ alkyl, and preferably is methyl. In a preferred embodiment, the alumoxane is methylalumoxane (MAO).

In a preferred embodiment, the metallocene catalyst is a supported metallocene-alumoxane catalyst comprising a metallocene and an alumoxane which are bound on a porous silica support.

One or more aluminiumalkyl represented by the formula $AlR^b_x$ can be used as additional cocatalyst, wherein each $R^b$ is the same or different and is selected from halogens or from alkoxy or alkyl groups having from 1 to 12 carbon atoms and x is from 1 to 3. Non-limiting examples are Tri-Ethyl Aluminum (TEAL), Tri-Iso-Butyl Aluminum (TIBAL), Tri-Methyl Aluminum (TMA), and Methyl-Methyl-Ethyl Aluminum (MMEAL). Especially suitable are trialkylaluminiums, the most preferred being triisobutylaluminium (TIBAL) and triethylaluminum (TEAL). The alkyl aluminium can be used in combination with a perfluoroborate e.g. $[Ph_3C][B(C_6F_5)_4]$ or $[Me_2NPhH][B(C_6F_5)_4]$. For example, using a combination of $[Ph_3C][B(C_6F_5)_4]$/TIBAL or of $[Me_2NPhH][B(C_6F_5)_4]$/TIBAL.

The present invention also encompasses a process for preparing a polypropylene composition. In some embodiments, said process comprises the steps of:

(i) providing a first metallocene-catalyzed polypropylene (RPP-A) which is homopolymer, or a random copolymer of propylene and of a co-monomer; and

(ii) providing a second metallocene-catalyzed polypropylene (RPP-B) which is a random copolymer of propylene and of a co-monomer;

(iii) and obtaining a metallocene-catalyzed polypropylene (RPP) comprising said first and second metallocene-catalyzed polypropylene, wherein steps (i) and (ii) are carried out by polymerizing propylene and, if any, the co-monomer in the presence of at least one metallocene catalyst.

The first metallocene-catalyzed polypropylene (RPP-A) and second metallocene-catalyzed polypropylene (RPP-B) provided in steps (i) and (ii) of the present process can be prepared by polymerizing propylene, if any a co-monomer, optionally in the presence of hydrogen, in the presence of a metallocene-catalyst as described above.

The polymerization can be carried out according to known techniques in one or more polymerization reactors. The polymerization is preferably performed in liquid propylene at temperatures in the range from 20 °C to 100 °C. Preferably, temperatures are in the range from 60 °C to 80 °C. The pressure can vary from 5 to 50 bars, preferably from 5 to 40 bars.

The polymerization process can be carried out in solution, slurry or gas phase. The slurry process can be carried out in a reactor suitable for such processes, such as continuously stirred tank reactors (CSTRs) or slurry loop reactors (in particular liquid full loop reactors). The pressure in the reactor can vary from 5 to 50 bars, preferably from 5 to 40 bars.

The amount of co-monomer to be injected in said one or more polymerization reactors may be determined such as to obtain the required co-monomer content in said first metallocene-catalyzed polypropylene (RPP-A) and in said second metallocene-catalyzed polypropylene (RPP-B).

Addition of hydrogen in the polymerization medium may be controlled to prepare said polypropylene composition. The amount of hydrogen added is determined to obtain the required melt flow index values.

In a preferred embodiments, two or more reactors, or two or more reaction zones of the same reactor, may be connected in series or in parallel, more preferably in series, in order to produce the first metallocene-catalyzed polypropylene (RPP-A) and second metallocene-catalyzed polypropylene (RPP-B) for use herein.

In some embodiments, the composition can be prepared by physically blending the first metallocene-catalyzed polypropylene (RPP-A) and the second metallocene-catalyzed polypropylene (RPP-B), and therefore the process comprises physically blending said first metallocene-catalyzed polypropylene (RPP-A) and second metallocene-catalyzed polypropylene (RPP-B).

The blending of the components of the polymer composition can be carried out according to any physical blending method and combinations thereof known in the art. This can be, for instance, dry blending, wet blending or melt blending. The blending conditions depend upon the blending technique involved.

If dry blending is employed, the dry blending conditions may include temperatures from room temperature up to just under the lowest melting temperature of the polymers employed. The components can be dry blended prior to a melt blending stage, which can take place for example in an extruder. Melt processing makes use of standard equipment of the thermoplastics industry. The components can be melt blended in a batch process such as in a Brabender Internal Mixer, Banbury, Haake or Clextral extruder or in a continuous process, such as in an extruder e.g. a single or twin screw extruder. The time required for the melt blending can vary broadly and depends on the method of blending employed. The time required is the time sufficient to thoroughly mix the components.

In a preferred embodiment, the composition can be prepared by chemically blending the first metallocene-catalyzed polypropylene (RPP-A) and the second metallocene-catalyzed polypropylene (RPP-B).

The present invention therefore also encompasses a process for preparing a polypropylene composition by chemical blending, preferably in at least two reactors connected in series, wherein, the process comprises the steps of

(i) polymerizing propylene, optionally hydrogen, and optionally a co-monomer in a first reactor in the presence of the metallocene catalyst, thereby obtaining a first metallocene-catalyzed polypropylene (RPP-A),

(ii) transferring said first metallocene-catalyzed polypropylene (RPP-A) and optionally unreacted comonomers of the first reactor in a second reactor, and

(iii) polymerizing in said second reactor and in the presence of said first metallocene-catalyzed polypropylene (RPP-A), propylene and a co-monomer, optionally hydrogen, thereby obtaining a second metallocene-catalyzed polypropylene (RPP-B), said first metallocene-catalyzed polypropylene (RPP-A) and said second metallocene-catalyzed polypropylene (RPP-B) forming the metallocene-catalyzed polypropylene (RPP).

Preferably, said metallocene-catalyzed polypropylene (RPP) is prepared by a process comprising the steps of

(i) polymerizing propylene and a co-monomer, and optionally hydrogen, in a first reactor in the presence of the metallocene catalyst, thereby obtaining a first metallocene-catalyzed polypropylene (RPP-A),

(ii) transferring said first metallocene-catalyzed polypropylene (RPP-A) and unreacted comonomers of the first reactor in a second reactor, and

(iii) polymerizing in said second reactor and in the presence of said first metallocene-catalyzed polypropylene (RPP-A), propylene and a co-monomer, optionally hydrogen, thereby obtaining a second metallocene-catalyzed polypropylene (RPP-B), said first metallocene-catalyzed polypropylene (RPP-A) and said second metallocene-catalyzed polypropylene (RPP-B) forming the metallocene-catalyzed polypropylene (RPP).

Preferably, the process is a slurry process, preferably carried out in slurry loop reactors (in particular liquid full loop reactors).

The polypropylene composition of the present invention may be transformed into articles by a transformation method selected from extrusion and injection methods, for examples methods selected from the group comprising injection moulding, blow moulding, injection stretch blow moulding, melt blown, cast or blown film extrusion, sheet extrusion, etc.

The present invention therefore also encompasses an article comprising a polypropylene composition as defined herein; or obtained according to a process as defined herein. In some embodiments, said article can comprise at least 90.0 % by weight of the polypropylene composition, preferably, the article comprises at least 95.0 % by weight of the polypropylene composition, more preferably at least 97.0 % by weight, still more preferably at least 98.0 % by weight.

In some embodiments, said article can be injection moulded articles, blow moulded articles, film products, etc. Preferred embodiments for polypropylene composition of the invention are also preferred embodiments for the article of the invention.

The invention also encompasses a process for preparing an article according to the invention. Preferred embodiments as described above are also preferred embodiments for the present process.

The invention also encompasses the use of a polypropylene composition according to the invention, in film applications, and injection and blow moulding applications.

The invention will now be illustrated by the following, non-limiting illustrations of particular embodiments of the invention.

**Examples**

**Test methods**

Melt index

The melt flow index ($MI_2$) of polypropylene was determined according to ISO 1133:2005 Method B, condition M, at a temperature 230 °C, and a 2.16 kg load using a die of 2.096 mm.

$MI_{105}$ was used to measure melt indexes higher than 300 g/10 min. $MI_{105}$ was determined at a temperature 190 °C, and a 2.16 kg load using a die of 1.0 mm.

Correlation between the above two MI measures was determined by measuring the melt flow index of several polypropylene grades using both methods. The results are shown in Table 1. Polypropylene Lumicene® MR 2002 and Polypropylene Lumicene® MH140 are metallocene-catalyzed propylene homopolymers commercially available from TOTAL Refining & Chemicals. Lumicene® MR30MC2, and Lumicene® MR60MC2 are metallocene-catalyzed random copolymer polypropylenes commercially available from TOTAL Refining & Chemicals. PPR-Ref is a reference metallocene-catalyzed random propylene copolymer (synthesis described below). All samples were powders (fluff as obtained at the exit of the reactor), 1 % by weight of BHT (2,6-tertbutyl-4-methylphenol) was added before the analysis.

Table 1

| Grade | $MI_2$ meas. (g/10 min) | $MI_{105}$ meas. (g/10 min) |
|---|---|---|
| MR2002 | 17.9 | 0.96 |
| MH140 | 150.5 | 9.21 |
| MH140 | 146.3 | 9.25 |
| PPR-Ref | 11.0 | 0.66 |
| MR30MC2 | 31.0 | 1.87 |
| MR60MC2 | 67.7 | 4.09 |

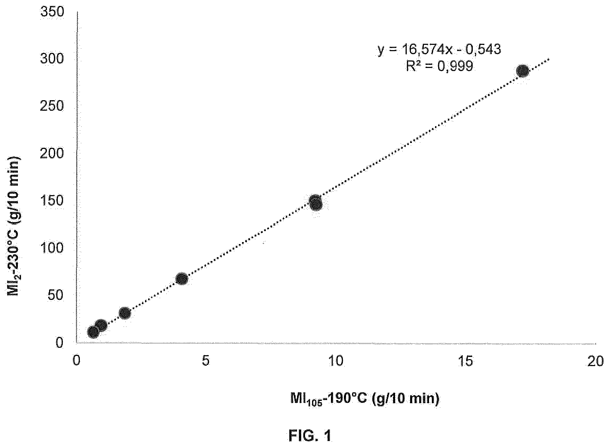

A linear correlation was found, with a coefficient of 16.57 between $MI_{105}$ and $MI_2$ as shown in Figure 1. The linear regression gave a very good correlation factor ($r^2$ = 0,999) and the slope corresponds to the ratio $MI_2/MI_{105}$. The calculated coefficient was used to calculate very low melt index.

Calculation of melt flow index $MI_2$ (230 °C) of the second random propylene copolymer (RPP-B): when the second random propylene copolymer is prepared without being isolated (for example in the second reactor of a double loop reactor), the melt flow index thereof can be determined by the following equation:

$$MFI_{RPP-B} = \left[ \frac{MFI_{RPP}^{-0.23} - W_{RPP-A} \times MFI_{RPP-A}^{-0.23}}{W_{RPP-B}} \right]^{\frac{-1}{0.23}}$$

wherein

$W_{RPP-A}$ is the weight fraction of the first random propylene copolymer (RPP-A),
$W_{RPP-B}$ is the weight fraction of the second random propylene copolymer (RPP-B),
$MFI_{RPP-A}$ is the melt flow index $MI_2$ (230 °C, 2.16 kg) in g/10 min measured according ISO 1133 of the first random propylene copolymer (RPP-A), i.e., of the product of the first reactor,
$MFI_{RPP}$ is the melt flow index $MI_2$ (230 °C, 2.16 kg) in g/10 min measured according ISO 1133 of the polypropylene composition (RPP), i.e., of the end product obtained in the second reactor, i.e. the mixture of the first random propylene copolymer (RPP-A) and the second random propylene copolymer (RPP-B) of the propylene copolymer (RPP),
$MFI_{RPP-B}$ is the calculated melt flow index $MI_2$ (230 °C, 2.16 kg) in g/10 min of the second random propylene copolymer (RPP-B).

Molecular weight, molecular distribution, and co-monomer distribution

The molecular weight ($M_n$ (number average molecular weight), $M_w$ (weight average molecular weight) and molecular weight distributions D ($M_w/M_n$), and D' ($M_z/M_w$) were determined by size exclusion chromatography (SEC) and in particular by IR-detected gel permeation chromatography (GPC) at high temperature (145 °C). Briefly, a GPC-IR5MCT from Polymer Char was used: 8 mg polymer sample was dissolved at 160 °C in 8 ml of trichlorobenzene stabilized with 1000 ppm by weight of butylhydroxytoluene (BHT) for 1 hour. Injection volume: about 400 $\mu$l, automatic sample preparation and injection temperature: 160 °C. Column temperature: 145 °C. Detector temperature: 160 °C. Column set: two Shodex AT-806MS (Showa Denko) and one Styragel HT6E (Waters), columns were used with a flow rate of 1 ml/min. Mobile Phase: trichlorobenzene stabilized with 1000 ppm by weight of butylhydroxytoluene (BHT) filtered through a 0.45 $\mu$m PTFE filter. Detector: Infrared detector (2800-3000 cm$^{-1}$) to measure the concentration, one narrow filter center based at 2928 cm$^{-1}$, and one narrow filter center based at 2959 cm$^{-1}$. Calibration: narrow standards of polystyrene (PS) (commercially available). Calculation for polypropylene of molecular weight $M_i$ of each fraction i of eluted polymer is based on the Mark-Houwink relation $\log_{10}(M_{PP}) = \log_{10}(M_{PS}) - 0.25323$ (cut off on the low molecular weight end at $M_{PP} = 1000$).
The molecular weight averages used in establishing molecular weight/property relationships are the number average ($M_n$), weight average ($M_w$) and z-average ($M_z$) molecular weight. These averages are defined by the following expressions and are determined form the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i M_i} = \frac{\sum_i h_i M_i}{\sum_i M_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight $M_i$. The third representation in each case (farthest right) defines how one obtains these averages from SEC chromatograms. $H_i$ is the height (from baseline) of the SEC curve at the i elution fraction and $M_i$ is the molecular weight of species eluting at this increment.

Co-monomer distribution

Co-monomer distribution illustrated by the $CH_3/CH_2$ ratio across the molecular weight distribution was also determined using the SEC apparatus described above equipped with an integrated high-sensitivity multiple band IR detector (IR5-MCT) as described by A. Ortin et al. (Macromol. Symp. 330, 63-80 2013 and T. Frijns-Bruls et al. Macromol. Symp. 356, 87-94 2015). The IR5-MCT detector included two narrow band filters tuned to the absorption region assigned to $CH_3$ (centered on 2959 cm$^{-1}$) and $CH_2$ groups (centered on 2928 cm$^{-1}$). The detector produced separate and continuous streams of absorbance data, measured through each of their IR selective filters at a fixed acquisition rate of one point per half second. The detector was equipped with a heated flow-through cell of 13 $\mu$L internal volume. For each sample, six different preparations at the same concentration were analyzed. Final results were obtained by averaging the data. (The presence of co-monomer was related to the ratio R of the signal at 2959 cm$^{-1}$ ($CH_3$) on the signal at 2928 cm$^{-1}$ ($CH_2$). This ratio is determined across the entire molecular mass distribution. Then, values were measured at $M = M_n$ and at $M = M_z$.

Differential Scanning Calorimetry (DSC) for Determination of Crystallization and Melting Temperatures.

Peak crystallization temperature ($T_c$), peak melting temperature ($T_m$) and heat of fusion ($\Delta H$) were measured via Differential Scanning using DQ 2000 instrument by TA Instruments, calibrated with indium and using T zero mode. The polymer analysis was performed with a 2 to 10 mg of polymer sample. The sample was first equilibrated at 20 °C and subsequently heated to 220 °C using a heating rate of 20 °C/min (first heat). The sample was held at 220 °C for 5 min to erase any prior thermal and crystallization history. The sample was subsequently cooled down to 20 °C with a constant cooling rate of 20 °C/min (first cool). The sample was held isothermal at 20 °C for 5 min before being heated to 220 °C at a constant heating rate of 20 °C/min (second heat). The exothermic peak of crystallization (first cool) was analyzed using the TA Universal Analysis software and the peak crystallization temperature ($T_c$) corresponding to 20 °C/min cooling rate was determined. The endothermic peak of melting (second heat) was also analyzed using the TA Universal Analysis software and the peak melting temperature ($T_m$) corresponding to 20 °C/min heating rate was determined. Unless otherwise indicated, reported values of $T_c$, $T_m$ in this invention refer to a cooling and heating rate of 20 °C/min, respectively.

Co-monomer content

Co-monomer content of the polypropylene composition: The total co-monomer content (in particular ethylene ($C_2$) i.e., $C_2$ % by weight) relative to the total weight of the polypropylene composition was determined using $^{13}C$ NMR.

Co-monomer content of the first metallocene-catalyzed polypropylene (RPP-A): The co-monomer content (in particular ethylene ($C_2$) i.e., $C_2$ % by weight) of RPP-A relative to the total weight of first metallocene-catalyzed polypropylene (RPP-A) was determined using $^{13}C$ NMR.

The sample was prepared by dissolving a sufficient amount of polymer in 1,2,4-trichlorobenzene (TCB 99 % spectroscopic grade) at 130 °C and occasional agitation to homogenize the sample, followed by the addition of hexa-deuterobenzene ($C_6D_6$, spectroscopic grade) and a minor amount of hexamethyldisiloxane (HMDS, 99.5+ %), with HMDS serving as internal standard. To give an example, about 600 mg of polymer were dissolved in 2.0 ml of TCB, followed by addition of 0.5 ml of $C_6D_6$ and 2 to 3 drops of HMDS.

$^{13}C$ NMR signal was recorded on a Bruker 500 MHz with a 10 mm probe using the conditions listed in Table 2.

Table 2

| |
|---|
| Pulse angle : 90° |
| Pulse repetition time : 20 s |
| Spectral width : 25000 Hz centered at 95 ppm |
| Data points : 64 K |
| Temperature : 130 °C +/-2 °C |
| Rotation : 15 Hz |
| Scan numbers : 2000 - 4000 |
| Decoupling sequence : inverse-gated decoupling sequence to avoid NOE effect |

$^{13}C\{^1H\}$ NMR spectrum was obtained by Fourier Transform on 131 K points after a light Gaussian multiplication. Spectrum was phased, baseline corrected and chemical shift scale was referenced to the internal standard HMDS at 2.03 ppm.

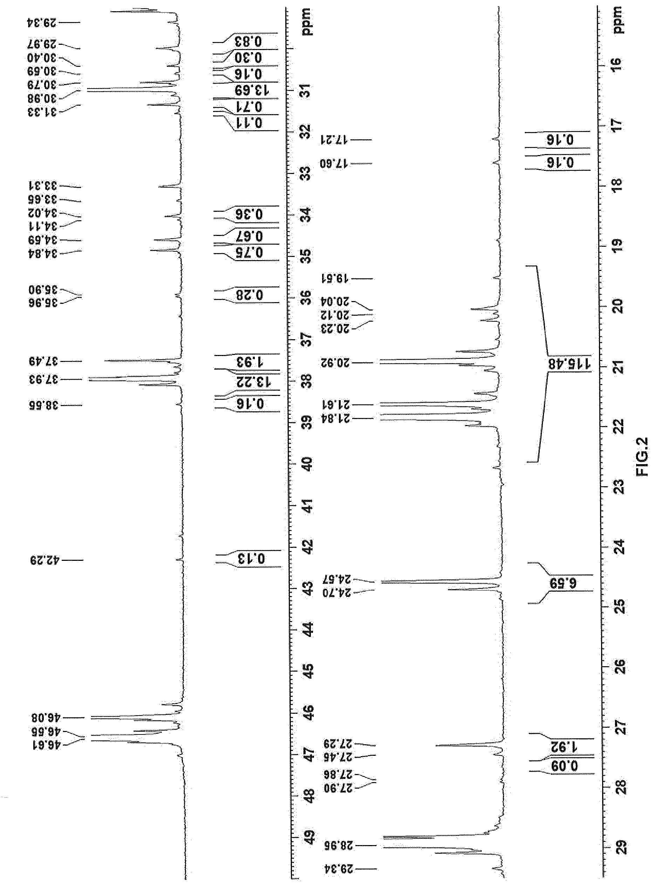

Chemical shifts of signals are peak picked and peaks are integrated shown in Figure 2 and in the following Table 3.

Table 3

| Region | Shift (ppm) | Region | Shift (ppm) | Region | Shift (ppm) |
|---|---|---|---|---|---|
| A | 22.80-19.6 | I | 27.74-27.54 | W | 30.12-29.84 |
| B | 42.37-42.18 | P | 34.92-34.73 | X | 27.55-27.10 |
| C | 38.64-38.43 | Q | 34.67-34.50 | Y | 24.94-24.26 |
| D | 36.04-35.81 | R | 34.06-33.9 | | |

(continued)

| Region | Shift (ppm) | Region | Shift (ppm) | Region | Shift (ppm) |
|---|---|---|---|---|---|
| E | 31.6-31.49 | S | 31.4-31.21 | | |
| F | 30.63-30.51 | T | 38.34-37.7 | | |
| G | 17.71-17.49 | U | 37.7-37.37 | | |
| H | 17.31-17.10 | V | 30.46-30.31 | | |

Chemical shits are given at +/- 0.05 ppm.

The main peak A is indicative of 1, 2 PP units.

Peak I is indicative of 1.3 PP units.

Peaks B, C, D, E, F, G, H are indicative of 2,1 PP units.

Peaks T, U, V, W, X, Y are indicative of ethylene incorporation in 1,2 PP unit

Peaks P, Q, R, S are indicative of ethylene incorporation after 2.1 PP unit

The % by weight of the $C_2$ content is obtained by the following areas (A) combination

$$A_{C3\,1,2} = A_A$$

$$A_{C3\,2,1} = (A_B + A_C + A_D + A_{E+}A_F + A_G + A_H)/7 + (0.5{*}A_P + 0.5{*}A_Q + 0.5{*}A_S)/3$$

$$A_{C3\,1,3} = A_I\,/\,2$$

$$A_{C2\,E1\,1,2} = (0.5{*}\,A_T + A_Y)/2$$

$$A_{C2\,E2\,1,2} = (A_U - A_I + A_X)/2 - A_V$$

$$A_{C2\,E3\,1,2} = ((A_U - A_I + A_T){*}0.5 + (A_X - A_V){*}0.5 + A_V + A_W + A_X + A_Y)/2 - A_{C2\,E1\,1,2} - A_{C2\,E2\,1,2}$$

$$A_{C2\,2,1} = (0.5{*}A_P + 0.5{*}A_Q + 0.5{*}A_{S+}A_R)/4$$

$$A_{C2} = (A_{C2\,E1\,1,2} + A_{C2\,E2\,1,2} + A_{C2\,E3\,1,2} + A_{C2\,2,1})$$

$$A_{C3} = (A_{C3\,1,2} + A_{C3\,2,1} + A_{C3\,1,3})$$

$$\%(wt.)\ C2 = (28\,{*}\,A_{C2})\,/\,(28\,{*}\,A_{C2} + 42\,{*}\,A_{C3})\ x\ 100$$

$$Randomness\ (\%) = A_{C2\,E1\,1,2}\,/\,A_{C2}$$

Calculation of comonomer content of the second random copolymer of propylene (RPP-B):

when the second random propylene copolymer is prepared without being isolated (for example in the second reactor of a double loop reactor), the comonomer content thereof can be determined by the following equation

$$C_{RPP-B} = \frac{C_{RPP} - W_{RPP-A} \times C_{RPP-A}}{W_{RPP-B}}$$

wherein

$W_{RPP-A}$ is the weight fraction [in wt.-%] of the first random propylene copolymer (RPP-A),
$W_{RPP-B}$ is the weight fraction [in wt.-%] of the second random propylene copolymer (RPP-B),
$C_{RPP-A}$ is the comonomer content [in wt.-%] measured by $^{13}$C NMR spectroscopy of the first random propylene copolymer (RPP-A), i.e. of the product of the first reactor,
$C_{RPP}$ is the comonomer content [in wt.-%] measured by $^{13}$C NMR spectroscopy of the end product obtained in the second reactor, i.e. of the mixture of the first random propylene copolymer (RPP-A) and the second random propylene copolymer (RPP-B) of the propylene copolymer (RPP),
$C_{RPP-B}$ is the calculated comonomer content [in wt.-%] of the second random propylene copolymer (RPP-B).

Test specimen

The compositions were injected on a Netstal 60 injection moulding machine to produce injection molded ISO bars in accordance with ISO 294-1:2017.

Notched Izod Impact Strength

Notched Izod Impact Strength was measured according to ISO 180/A1:2006 at 23 °C, V notch sample type 1A, with the conditions listed in Table 4. Izod impact is defined as the kinetic energy needed to initiate a fracture in a polymer sample specimen and continue the fracture until the specimen is broken. Tests of the Izod impact strength determine the resistance of a polymer sample to breakage by flexural shock as indicated by the energy expended from a pendulum type hammer in breaking a standard specimen in a single blow. The specimen is notched which serves to concentrate the stress and promote a brittle rather than ductile fracture. Specifically, the Izod impact test measures the amount of energy lost by the pendulum during the breakage of the test specimen. The energy lost by the pendulum is the sum of the energies required to initiate sample fracture, to propagate the fracture across the specimen, and any other energy loss associated with the measurement system (e.g., friction in the pendulum bearing, pendulum arm vibration, sample toss energy, etc.).

Table 4

| Temperature | 23 °C |
|---|---|
| Norm | ISO 180:2000 |
| Impact energy | 1.00 J |
| Impact velocity | 3.5 m/s |
| Notch type | V-Notch Type 1A |
| Notch angle | 45° |
| Test specimen | bar 80 mm x 10 mm x 4 mm cut from type 1A specimen |

Flexural Modulus

The flexural modulus was determined according to ISO 178:2011 method A with the conditions listed in Table 5.

Table 5

| Temperature | (T° 23 °C ± 2 °C) |
|---|---|

(continued)

| Test machine | 00-0311 (Zwick tensile testing machine) |
|---|---|
| Force sensor | 500 N cell |
| Displacement transducer | Extensometer |
| Norm | ISO 178 :2011 method A |
| Test specimen | bar 80 mm x 10 mm x 4 mm cut from type 1A specimen (ISO 294-1:2017) |
| Pre-charge | 0.5 N |
| Test speed | 2 mm/min |
| Span between specimen supports | 64 mm |
| End of the test | The module was measured between 0.05 % et 0.25% deformation |
| Relative humidity | 50% $\pm$10 % |

Spiral Flow (240 °C, 500 bars)

Spiral flow measurements were performed by injecting melted polymer into a spiral mold and measuring the length of the resulting spiral. The longer the spiral, the easier the injection. Spiral flow was determined by a Netstal 60 injection moulding machine with a screw having a diameter of 32 mm and an UD ratio of 25. The melt temperature was 240 °C. Injection pressure was set to 500 bar. Mold temperature was kept at 40 $\pm$ 1 °C. The mould used allows producing a flat ribbon sample of 10 mm width, 1.5 mm of thickness and a length of at most 130 cm. The Temperature profile was 210-220-230-240-240-240 °C.

Haze

Haze was determined according to ISO 14782:1999 on samples having 1 mm of thickness using incandescent light source, Haze-gard dual from BYK Gardner. The squares were prepared by injecting the compositions on the Netstal 60 injection moulding machine. Injection speed was 120 mm/s. Mold temperature was kept at 40 °C. Pressure was maintained at 750 bars. The Temperature profile was 230 °C.

Gloss

Gloss was measured in accordance with ASTM D2457:2013 at an angle of 60°, on 1 mm thick samples prepared by injection in a mould, with the Byk-Gardner micro-gloss reflectometer according to. A BYK-Gardner glossmeter was used, with a standard having a gloss of 93.9 %.

Charpy notched impact strength (NIS):

Charpy NIS was determined according to ISO 179-1eA:2010 on V-notched samples of 80x10x4 mm$^3$ at 23 °C. The test specimens were prepared by injection molding according to ISO 294-1:2017, at a temperature of 200 °C, a mold at 40 °C, a screw of 32 mm, a closure strength of 600kN and a cycle time of 60s.

Falling Weight Impact test:

The falling weight test on 60x60x2mm plaques was performed according to ISO 6603- 2:2002 with the following conditions: The tests were done on a Fractovis Ceast equipment with a hammer M2091 having a diameter of 12.7 mm and a weight of 19.927 kg. The hammer was not lubricated. The test speed was 4.43 m/s. the number of points was 15000. The frequency was 1333 kHz. An internal digital trigger was used. Test specimens were in the form injection-molded plates and had the following dimensions 60x60x2mm. The diameter of the sample holder was 40 mm. The tests were carried out at a temperature ranging from 40 °C to -50 °C. The height was 1.0 m. The results are based upon an average of 5 samples.

Ductility index (DI) (%) = ( ( Energy at break - Energy at Peak ) / Energy at break ) X 100

The mechanical properties: such as the tensile modulus, the strength at break, the strength at yield, the elongation at yield and elongation at break were determined at 23 °C according to ISO 527-1:2012 using an extensometer (Method B) on injection moulded specimens type 1A, with 4 mm sample thickness. The test speed was 50 mm/min.

Elastic modulus is obtained during the tensile strength test. It is the slope of the line between 0.05 and 0.25 % deformation.

Xylene soluble content

In brief, xylene soluble content is determined by dissolving the propylene polymer in refluxing xylene, cooling the solution to 25 °C, filtering the solution, and subsequently evaporating the solvent. The residue, which is the xylene soluble portion of the propylene polymer, is then dried and weighed. The protocol is as follows: around 2.5 g of propylene polymer were weighed into a flask and 250 ml xylene were added. The xylene was heated under stirring and then to reflux for 15 minutes, until dissolution. Heating and stirring were stopped, and the solution was left standing for 15 minutes exactly. The flask was then placed in a thermostated bath set to 25 °C +/- 1 °C for 1 hour. The solution was filtered through Whatman n° 4 filter paper and exactly 50 ml of solution were collected. The solution was then evaporated and the residue dried and weighed. The percentage of xylene solubles ("XS") was then calculated according to XS (in wt.%) = (Weight of the residue / Initial total weight of PP) * 500 with all weights being in the same units.

**Example 1**

The random co-polymers were prepared by polymerization in liquid propylene. The catalyst used is a supported metallocene catalyst. rac-Methyl(cyclohexyl)silanediyl-bis[(2-methyl-4-(4-tert-butylphenyl)indenyl]zirconium dichloride (CAS No: 888227-55-2) was used as metallocene component supported on silica which has been previously activated with methyl-alumoxane (MAO) as described below.

In a 250 mL round bottom flask conditioned under a light nitrogen flow, 25 g of silica was stirred at 60 rpm and dried at 110 °C overnight. 190 mL of dry hexane was then added. The suspension was cooled at 0 °C and 6.4 mL of VertecBip (20:80 weight ratio of $Ti(OC_4H_9)_4$ to $Ti(OC_3H_7)_4$) was added dropwise to impregnate the support. The suspension was mixed for 20 hours at 0 °C. The solvent was removed under reduced pressure and the resulting silica was dried under a nitrogen flow at 450 °C for 4 hours. The Ti-impregnated silica had a Ti content of 4 % by weight.

20 g of the dried silica was introduced in a 500 mL round-bottomed flask. Toluene was added and the suspension was stirred at 100 rpm. MAO (30 % by weight in toluene) was dropwise added via a dropping funnel and the resulting suspension was heated at 110 °C (reflux) for 4 hours. The amount of added MAO was calculated to reach the desired Al loading. After the reflux, the suspension was cooled down to room temperature and the mixture was filtered through a glass frit. The recovered powder was washed with toluene and pentane (or iso-hexane) before being dried under reduced pressure overnight. The metallocene was dissolved in $AIR_3$ (R = $C_4H_9$). After one-hour reaction, the MAO-support was slowly added to the metallocene/AIRa mixture and mixing was carried out for two hours. Solvent was removed by filtration. The cake was washed with iso-hexane. The final catalyst system was filtered and dried at room temperature. The resulting powder was slurried in mineral oil and stored cold.

The polymerization reaction was conducted in a double-loop reactor, (two loop reactors connected in series), pre-polymerization was performed in a smaller loop reactor, connected to the first loop reactor of the double loop reactor. The polymerization conditions and results for the polymers according to the invention are given in Table 6A.

Table 6A

| Polymer | | | PPR-1 | PPR-2 | PPR-3 | PPR-4 | PPR-5 | PPR-6 | PPR-7 | PPR-8 | PPR-9 | PPR-10 | PPR-11 |
|---|---|---|---|---|---|---|---|---|---|---|---|---|---|
| Pre-Polymerization | | ALKYL (type) | TeAl | TeAl | TeAl | TeAl | TeAl | TeAl | TeAl | TeAl | TeAl | TeAl | TeAl |
| | | Temperature (°C) | 10 | 10 | 10 | 10 | 10 | 10 | 10 | 10 | 10 | 10 | 10 |
| | | Propylene (kg/h) | 50.0 | 50.0 | 50.0 | 50.0 | 50.0 | 50.0 | 50.0 | 50.0 | 50.0 | 50.0 | 50.0 |
| | | Hydrogen (Nl/h) | 0 | 0 | 0 | 0 | 0 | 0 | 0 | 0 | 0 | 0 | 0 |
| | | Ethylene (kg/h) | 0 | 0 | 0 | 0 | 0 | 0 | 0 | 0 | 0 | 0 | 0 |
| | | Residence time (min) | 5.5 | 5.5 | 5.5 | 5.5 | 5.5 | 5.5 | 5.5 | 5.5 | 5.5 | 5.5 | 5.5 |
| First loop reactor | | Temperature (°C) | 70 | 70 | 70 | 70 | 70 | 70 | 70 | 70 | 70 | 67 | 67 |
| | | Propylene (kg/h) | 80.0 | 80.0 | 80.0 | 80.0 | 80.0 | 80.0 | 80.0 | 80.0 | 80.0 | 80.0 | 80.0 |
| | | Ethylene (kg/h) | 2.4 | 2.4 | 2.8 | 3.0 | 2.8 | 2.5 | 2.5 | 2.7 | 3.0 | 3.2 | 3.2 |
| | | Hydrogen (Nl/h) | 13.5 | 13.9 | 14.0 | 16.0 | 26.1 | 24.7 | 31.0 | 33.3 | 2.2 | 11.0 | 11.0 |
| | | Contribution (wt.%) | 73.4 | 69.9 | 72.2 | 74.1 | 74.7 | 72.6 | 71.1 | 73.0 | 65.8 | 75.4 | 74.8 |
| | | $H_2/C_3$ (Nl/kg) | 0.10 | 0.11 | 0.11 | 0.12 | 0.20 | 0.19 | 0.24 | 0.26 | 0.02 | 0.08 | 0.08 |
| | | Residence time (min) | 31 | 31 | 31 | 31 | 31 | 31 | 31 | 31 | 31 | 31 | 31 |
| | | $MI_2$ (g/10min) | 5.5 | 5.3 | 6.2 | 6.6 | 18.4 | 18.5 | 32.0 | 38.4 | 1.0 | 5.1 | 8.2 |
| Second loop rector | | Temperature (°C) | 70 | 70 | 70 | 70 | 70 | 70 | 70 | 70 | 70 | 73 | 73 |
| | | Propylene (kg/h) | 25.0 | 25.0 | 25.0 | 25.0 | 25.0 | 25.0 | 25.0 | 25.0 | 25.0 | 25.0 | 25.0 |
| | | Ethylene (kg/h) | 2.38 | 2.30 | 1.60 | 0.50 | 0.50 | 1.60 | 1.60 | 0.45 | 0.00 | 0.00 | 0.00 |
| | | Hydrogen (Nl/h) | 180.0 | 120.0 | 100.0 | 120.0 | 120.0 | 120.0 | 120.0 | 120.0 | 80.0 | 84.0 | 86.0 |
| | | Contribution (wt.%) | 27.6 | 30.1 | 27.6 | 25.9 | 25.3 | 27.5 | 29.2 | 27.0 | 34.2 | 24.7 | 25.2 |
| | | $H_2/C_3$ (Nl/kg) | 7.2 | 4.8 | 4. | 4.80 | 4.8 | 4.8 | 4.8 | 4.8 | 3.2 | 3.3 | 3.4 |
| | | Residence time (min) | 27 | 27 | 27 | 27 | 27 | 27 | 27 | 27 | 27 | 27 | 27 |

A reference metallocene random copolymer PPR-ref was also prepared as described herein above using the same catalyst system. The polymerization reaction was conducted in a double-loop reactor, (two loop reactors connected in series), pre-polymerization was performed in a smaller loop reactor, connected to the first loop reactor of the double loop reactor. The polymerization conditions and results are given in Table 6B.

Table 6B

| Polymer | | | PPR-ref |
|---|---|---|---|
| | ALKYL | (type) | TeAl |
| Pre-polymerization | ALKYL | (ppm) | 10 |
| | Temperature | (°C) | 14 |
| | Propylene | (kg/h) | 50 |
| | Hydrogen | (Nl/h) | 0 |
| | Ethylene | (kg/h) | 0 |
| | Residence time | (min) | 5.5 |

(continued)

| Polymer | | | PPR-ref |
|---|---|---|---|
| | ALKYL | (type) | TeAl |
| First loop reactor | Temperature | (°C) | 70 |
| | Propylene | (kg/h) | 42 |
| | Ethylene | (kg/h) | 1.8 |
| | Hydrogen | (Nl/h) | 25 |
| | Contribution | (wt.%) | 59.1 |
| | $H_2/C_3$ | | 0.27 |
| | Residence time | (min) | 48 |
| | $MI_{105}$ | (g/10min) | |
| | $MI_2$ | (g/10min) | 10 |
| Second loop reactor | Temperature | (°C) | 70 |
| | Propylene | (kg/h) | 45 |
| | Ethylene | (kg/h) | 1.0 |
| | Hydrogen | (Nl/h) | 11.0 |
| | Contribution | (wt. %) | 40.9 |
| | $H_2/C_3$ | | 0.24 |
| | Residence time | (min) | 33 |
| | $MI_2$ | (g/10min) | 11.0 |
| | $C_2$ | (wt.%) | 2 |

The polymers obtained were pelletized, additivated and analyzed. The additives used for the compositions were the same as the ones used for the reference PPR-Ref, the details of which are given in Table 7.

Table 7

| Reference | PPR-Ref additives |
|---|---|
| | Irgafos 168 (400 ppm by weight) |
| | Irganox 1010 (400 ppm by weight) |

Gel Permeation Chromatography as described in the test methods section was used to measure $M_w$, $M_n$, $M_z$, $M_w/M_n$, $M_z/M_w$, $M_z/M_n$. The assessment of thermal properties was performed by Differential Scanning Calorimetry (DSC) as described in the test methods section. The co-monomer distribution was determined by GPC as described in the test methods section. The presence of co-monomer was related to the ratio of the signal at 2959 cm$^{-1}$ on the signal at 2928 cm$^{-1}$. The distribution of the co-monomer was calculated for every molecular weight knowing the ratio of the two signals. The ratio R of the signal at 2959 cm$^{-1}$ on the signal at 2928 cm$^{-1}$ was measured at M = $M_n$ and at M = $M_z$. Then, for each resin, the ratio of $R(M_z)$ on $R(M_n)$ were compared. Features of the compositions and reference are shown in Table 8.

Table 8

| Resin | PPR-1 | PPR-2 | PPR-3 | PPR-4 | PPR-6 | PPR-7 | PPR-8 | PPR-9 | PPR-10 | PPR-11 | PPR-Ref |
|---|---|---|---|---|---|---|---|---|---|---|---|
| Nucleated? | No | No | No | No | No | No | No | No | No | No | No |
| | product prepared in the first reactor (RPP-A) measured on the fluff | | | | | | | | | | |
| $M_n$ (RPP-A) (kg/mol) | 89.3 | 91.8 | 94.6 | 94.0 | 67.2 | 57.9 | 52.4 | 142.9 | 105.3 | 101.7 | |
| $M_w$ (RPP-A) (kg/mol) | 278.4 | 286.0 | 287.4 | 289.2 | 201.2 | 169.8 | 162.6 | 439.8 | 298.6 | 304.3 | |
| $M_z$ (RPP-A) (kg/mol) | 597.8 | 611.4 | 606.2 | 611.2 | 411.7 | 338.3 | 329.5 | 968.4 | 617.5 | 640.0 | |
| $M_w/M_n$ (RPP-A) | 3.12 | 3.12 | 3.04 | 3.08 | 2.99 | 2.93 | 3.10 | 3.08 | 2.84 | 2.99 | |
| $M_z/M_w$ (RPP-A) | 2.15 | 2.14 | 2.11 | 2.11 | 2.05 | 1.99 | 2.03 | 2.20 | 2.07 | 2.10 | |
| $M_z/M_n$ (RPP-A) | 6.69 | 6.66 | 6.41 | 6.50 | 6.12 | 5.85 | 6.29 | 6.78 | 5.86 | 6.29 | |
| $C_2$ (RPP-A) (%wt.) | 1.81 | 1.80 | 2.08 | 2.22 | 1.87 | 1.84 | 2.10 | 2.19 | 2.30 | 2.32 | 2 |
| $MI_2$ (RPP-A) (g/10min) | 4.59 | 4.14 | 4.26 | 4.98 | 15.20 | 33.80 | 33.35 | 0.95 | 5.04 | 4.60 | |
| | Fraction prepared in the second reactor (RPP-B) | | | | | | | | | | |
| $C_2$ (calc) (RPP-B) (%wt.) | 2.87 | 3.23 | 2.96 | 2.15 | 2.77 | 2.72 | 1.98 | 1.76 | 1.75 | 1.74 | 2 |
| $MI_2$ (calc) (RPP-B) (g/10min) | 144.4 | 330.2 | 88.9 | 171.5 | 539.0 | 211.1 | 512.5 | 85.5 | 42.5 | 327.6 | |
| | End product pellets (RPP) | | | | | | | | | | |
| $C_2$ total (%wt.)$^{13}$C NMR | 2.09 | 2.23 | 2.33 | 2.20 | 2.11 | 2.10 | 2.06 | 2.05 | 2.16 | 2.18 | 1.9 |
| Split in $C_2$ (%wt.) ($=C_{2(RPP-A)}-C_{2(RPP-B)}$) | -1.06 | -1.44 | -0.88 | 0.08 | -0.90 | -0.87 | 0.12 | 0.43 | 0.55 | 0.58 | 0 |
| $MI_2$ (g/10min) | 9.09 | 10.39 | 8.20 | 9.80 | 31.40 | 53.30 | 59.87 | 2.80 | 7.80 | 9.70 | 9.10 |
| co-monomer distribution ratio $R(M_z)/R(M_n)$ | 1.0037 | 1.0048 | 1.0043 | 1.0017 | 1.0017 | 1.0035 | 1.0011 | 0.9992 | 0.9987 | 0.9997 | 0.999 |
| $M_n$ (kg/mol) | 30.5 | 38.1 | 42.3 | 38.1 | 32.1 | 29.3 | 27.9 | 48.5 | 44.1 | 45.4 | 73.5 |
| $M_w$ (kg/mol) | 228.0 | 225.6 | 231.1 | 220.7 | 157.0 | 132.6 | 129.8 | 315.2 | 224.5 | 226.9 | 205.6 |
| $M_z$ (kg/mol) | 601.3 | 586.3 | 589.3 | 555.5 | 378.0 | 309.0 | 304.9 | 881.2 | 559.5 | 567.1 | 399.4 |
| $M_w/M_n$ | 7.47 | 5.92 | 5.46 | 5.80 | 4.89 | 4.53 | 4.65 | 6.50 | 5.09 | 5.00 | 2.80 |
| $M_z/M_w$ | 2.64 | 2.60 | 2.55 | 2.52 | 2.41 | 2.33 | 2.35 | 2.80 | 2.49 | 2.50 | 1.94 |

| | End product pellets (RPP) | | | | | | | | | | |
|---|---|---|---|---|---|---|---|---|---|---|---|
| $M_z/M_n$ | 19.71 | 15.39 | 13.93 | 14.58 | 11.77 | 10.54 | 10.93 | 18.17 | 12.69 | 12.49 | 5.43 |
| $T_m^{peak}$ (°C) | 136.6 | 136.5 | 134.0 | 134.9 | 136.8 | 136.6 | 137 | 137 | 136.2 | 136 | 134.2 |
| $\Delta H_m$ (J/g) | 74.2 | 68.8 | 68.4 | 73.2 | 71.7 | 72.3 | 74.6 | 70.9 | 64.4 | 68.1 | 80.5 |
| $T_m^{onset}$ (°C) | 132.4 | 131.6 | 130.1 | 131.2 | 132.5 | 132.7 | 131.8 | 132.8 | 131.9 | 131.8 | 129.4 |
| $T_c^{peak}$ (°C) | 101.4 | 100.7 | 99.0 | 100.0 | 102.1 | 102.4 | 102.5 | 102.4 | 100.7 | 100.7 | 94.1 |
| $T_m$-$T_c$ °C | 35.2 | 35.8 | 35.0 | 34.9 | 34.7 | 34.2 | 34.5 | 34.6 | 35.5 | 35.3 | 40.1 |
| $\Delta H_c$ (J/g) | -73.9 | -69.7 | -72.7 | -72.1 | -72.9 | -71.5 | -75.7 | -72.4 | -65.9 | -67 | -71.2 |
| XS (wt.%) | 2.0 | 1.4 | 1.0 | 0.9 | 1.2 | 1.3 | 1.1 | 0.5 | 0.7 | 0.6 | 0.7 |

An increase of the crystallization temperature can be observed when compositions according to the invention are compared to the reference composition PPR-Ref. Thus, cycle time during injection was decreased.

Mechanical properties were analyzed and the results are shown in Table 9.

Table 9

| Resin | PPR-1 | PPR-2 | PPR-3 | PPR-4 | PPR-6 | PPR-7 | PPR-8 | PPR-9 | PPR-10 | PPR-11 | PPR-Ref |
|---|---|---|---|---|---|---|---|---|---|---|---|
| Nucleated? | No | No | No | No | No | No | No | No | No | No | No |
| Flex. Mod. (MPa) | 1211 | 1142 | 1106 | 1149 | 1220 | 1258 | 1336 | 1231 | 1143 | 1130 | 1005 |
| Elastic modulus (Mpa) | 1163 | 1109 | 1092 | 1124 | 1165 | 1206 | 1261 | 1156 | 1099 | 1093 | 1103 |
| Tensile strength at Yield av. (Mpa) | 30.06 | 29.18 | 28.8 | 29.38 | 29.91 | 30.41 | 31 | 30.31 | 29.03 | 23.83 | 29.34 |
| Elongation at Yield (%) | 9.5 | 9.89 | 9.86 | 9.5 | 9.43 | 9.27 | 8.99 | 9.05 | 9.51 | 9.55 | 9.13 |
| Tensile strength 50% (%) | 16.85 | 16.45 | 16.57 | 16.62 | 15.79 | 15.67 | 16.21 | 18.1 | 16.44 | 16.42 | 16.37 |
| Tensile strength at break (%) | 30.53 | 29.73 | 29.74 | 29.81 | 19.14 | 15.73 | 17.15 | 30.4 | 29.69 | 29.56 | 28.84 |
| Elongation at Break av. (%) | 603.7 | 600.5 | 573.4 | 580.9 | 1587.3 | 500.4 | 574.8 | 535.3 | 576.8 | 576.7 | 620.1 |
| Nom. Elongation at Break av. (%) | 563.4 | 570.3 | 546.1 | 547.3 | 492.5 | 395.5 | 467.9 | 487.9 | 550.1 | 550.2 | 555.6 |
| Izod 23°C (kj/m$^2$) | 3.55 | 3.61 | 3.81 | 3.64 | 2.83 | 2.60 | 2.72 | 4.75 | 3.68 | 3.82 | 3.54 |
| Charpy 23°C (kJ/m$^2$) | 3.59 | 3.54 | 3.84 | 3.58 | 2.67 | 2.22 | 2.3 | 4.97 | 3.82 | 3.89 | |
| Gloss (60°) | 101 | 101.6 | 102.1 | 101 | 98.3 | 97.3 | 96.4 | 102.6 | 102 | 101.5 | 98.2 |
| Haze (%) | 45.3 | 44.8 | 43.6 | 45.5 | 48.1 | 49.6 | 53.2 | 41.7 | 44.8 | 44.2 | 51.4 |
| Spiral Flow 240°C - 500 bars (mm) | 385 | 368 | 349 | 357 | 479 | 545 | 545 | 291 | 347 | 343 | 277 |
| Falling Weight | | | | | | | | | | | |
| DI (%)- 40°C | | | | | | 61.9 | | 60 | | | |
| DI (%)- 30°C | 58.6 | | 58.7 | 28.1 | 54.9 | 46.1 | 57.1 | 6.9 | | | |
| DI (%)- 23°C | 11.1 | 52.1 | 32.2 | 2.6 | 35.5 | 5.4 | 45.3 | 4.7 | 52.1 | 47.7 | 50 |
| DI (%)- 15°C | | 1.8 | | | | | | | 20.2 | 2.5 | 3.5 |
| DI (%)- 10°C | | 12.3 | 3.4 | | 3.9 | 2.5 | 2.8 | | 5.6 | 3.4 | 3.5 |

An improved flexural modulus can be observed when compositions according to the invention are compared to the reference composition PPR-Ref. Moreover, by comparison with reference, spiral flow measured was also longer. Improvement of injection ability was also observed.

**Claims**

1. A polypropylene composition comprising:

   (a) a first metallocene-catalyzed polypropylene (RPP-A) which is homopolymer, or a random copolymer of propylene and of a co-monomer; and
   (b) a second metallocene-catalyzed polypropylene (RPP-B) which is a random copolymer of propylene and of a co-monomer;

   wherein said polypropylene composition has:

   - a total co-monomer content of at least 1.1 % by weight relative to the total weight of said polypropylene composition, as determined by $^{13}$C NMR analysis, said co-monomer being an alpha-olefin different from propylene;
   - a melting temperature $T_m$ of at least 130 °C, measured by DSC;
   - a crystallization temperature $T_c$ of at least 95.0 °C, measured by DSC;
   - a ratio of weight average molecular weight ($M_w$) to number average molecular weight ($M_n$) [$M_w/M_n$] of at least 4.50;
   - a ratio of z-average molecular weight ($M_z$) to weight average molecular weight ($M_w$) [$M_z/M_w$] of at least 2.10; and
   - a co-monomer distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography; and
   - a xylene soluble content (XS) of at most 3.0 % by weight, wherein the XS is measured as defined in the description under test methods.

2. The polypropylene composition according to claim 1, wherein the difference between the melting temperature $T_m$ and the crystallization temperature $T_c$ of the polypropylene composition ($T_m$-$T_c$) is greater than 33.0 °C.

3. The polypropylene composition according to any one of claims 1 or 2, wherein the difference between the melting temperature $T_m$ and the crystallization temperature $T_c$ of the non-nucleated polypropylene composition ($T_m$-$T_c$) is lower than 38.0 °C.

4. The polypropylene composition according to any one of claims 1-3, having a ratio of z-average molecular weight ($M_z$) to number average molecular weight ($M_n$) [$M_z/M_n$] of at least 6.0.

5. The polypropylene composition according to any one of claims 1-4, wherein the melt flow index of the second metallocene-catalyzed polypropylene (RPP-B) is greater than the melt flow index of the first metallocene-catalyzed polypropylene (RPP-A); the values of melt flow index being measured according to ISO 1133:2005 Method B, condition M, at a temperature 230 °C and a 2.16 kg load.

6. The polypropylene composition according to any one of claims 1-5, wherein said co-monomer is ethylene.

7. The polypropylene composition according to any one of claims 1-6, wherein the melt flow index of the second metallocene-catalyzed polypropylene (RPP-B) is greater than 40.0 g/10 min, preferably from 40.0 to 5000 g/10 min, more preferably from 40.0 to 3000 g/10 min; as measured according to ISO 1133:2005 Method B, condition M, at a temperature 230 °C and a 2.16 kg load.

8. The polypropylene composition according to any one of claims 1-7, wherein the melt flow index of the first metallocene-catalyzed polypropylene (RPP-A) is of at most 40.0 g/10 min, preferably from 0.05 to 40.0 g/10 min, more preferably from 0.05 to 35.0 g/10 min; as measured according to ISO 1133:2005 Method B, condition M, at a temperature 230 °C and a 2.16 kg load.

9. The polypropylene composition according to any one of claims 1-8, comprising: from 60 to 80 % by weight, of the first metallocene-catalyzed polypropylene (RPP-A), relative to the total weight of the composition.

**10.** The polypropylene composition according to any one of claims 1-9, comprising: from 20 to 40 % by weight of the second metallocene-catalyzed polypropylene (RPP-B), preferably, relative to the total weight of the composition.

**11.** The polypropylene composition according to any one of claims 110, having a melt flow index ranging from 1.0 to 200 g/10 min, preferably from 1.0 to 110 g/10 min, more preferably from 1.0 to 80 g/10 min, more preferably from 1.0 to 70 g/10 min; as measured according to ISO 1133:2005 Method B, condition M, at a temperature 230 °C and a 2.16 kg load.

**12.** The polypropylene composition according to any one of claims 1-11, having a flexural modulus greater than 900 MPa, the flexural modulus being measured at 23 °C according to ISO 178:2011 method A.

**13.** The polypropylene composition according to any one of claims 1-12, wherein said polypropylene composition comprises a chemical (in-situ) blend of said first metallocene-catalyzed polypropylene (RPP-A) and said second metallocene-catalyzed polypropylene (RPP-B).

**14.** The polypropylene composition according to any one of claims 1-12, wherein said polypropylene composition comprises a physical blend of said first metallocene-catalyzed polypropylene (RPP-A) and said second metallocene-catalyzed polypropylene (RPP-B).

**15.** A process for the preparation of the polypropylene composition according to any one of claims 1-14 comprising the steps of:

(i) providing a first metallocene-catalyzed polypropylene (RPP-A) which is homopolymer, or a random copolymer of propylene and of a co-monomer; and
(ii) providing a second metallocene-catalyzed polypropylene (RPP-B) which is a random copolymer of propylene and of a co-monomer;
(iii) and obtaining a polypropylene composition comprising said first and second metallocene-catalyzed polypropylene, wherein steps (i) and (ii) are carried out by polymerizing propylene and, if any, the co-monomer in the presence of at least one metallocene catalyst;

said polypropylene composition having:

- a total co-monomer content of at least 1.1 % by weight relative to the total weight of said polypropylene composition, as determined by $^{13}$C NMR analysis, said co-monomer being an alpha-olefin different from propylene;
- a melting temperature $T_m$ of at least 130 °C, measured by DSC;
- a crystallization temperature $T_c$ of at least 95.0 °C, measured by DSC;
- a ratio of weight average molecular weight ($M_w$) to number average molecular weight ($M_n$) [$M_w/M_n$] of at least 4.50;
- a ratio of z-average molecular weight ($M_z$) to weight average molecular weight ($M_w$) [$M_z/M_w$] of at least 2.10; and
- a co-monomer distribution ratio $R(M_z)/R(M_n)$ higher than 0.995, wherein $R(M_z)$ is the ratio at $M_z$ of the IR signal measured at 2959 cm$^{-1}$ on the signal at 2928 cm$^{-1}$, and $R(M_n)$ is the ratio at $M_n$ of the IR signal measured at 2959 cm$^{-1}$ on the signal at 2928 cm$^{-1}$, as determined by IR-detected gel permeation chromatography and
- a xylene soluble content (XS) of at most 3.0 % by weight, wherein the XS is measured as defined in the description under test methods.

**16.** A polypropylene composition according to any one of claims 1-14 obtained by the process according to claim 15.

**17.** An article comprising a polypropylene composition according to any one of claims 1-14 or 16.

**18.** Use of a polypropylene composition according to any one of claims 1-14, 16, for the production of injected or extruded articles.

**Patentansprüche**

**1.** Polypropylenzusammensetzung, umfassend:

(a) ein erstes metallocen-katalysiertes Polypropylen (RPP-A), das ein Homopolymer ist, oder ein beliebiges Co-Polymer von Propylen und von einem Co-Monomer; und

(b) ein zweites metallocen-katalysiertes Polypropylen (RPP-B), das ein beliebiges Co-Polymer von Propylen und von einem Co-Monomer ist;

wobei die Polypropylenzusammensetzung Folgendes aufweist:

- einen Co-Monomer-Gesamtanteil von mindestens 1,1 Gew.-% relativ zu dem Gesamtgewicht der Polypropylenzusammensetzung, wie durch eine $^{13}$C NMR Analyse bestimmt, wobei das Co-Monomer ein Alpha-Olefin ist, das sich von Propylen unterscheidet;
- eine Schmelztemperatur $T_m$ von mindestens 130 °C, gemessen durch DSC;
- eine Kristallisierungstemperatur $T_c$ von mindestens 95,0 °C, gemessen durch DSC;
- ein Verhältnis des gewichtsmittleren Molekulargewichts ($M_w$) zu dem zahlenmittleren Molekulargewicht ($M_n$) [$M_w/M_n$] von mindestens 4,50;
- ein Verhältnis des z-mittleren Molekulargewichts ($M_z$) zu dem gewichtsmittleren Molekulargewicht ($M_w$) [$M_z/M_w$] von mindestens 2,10; und
- ein Co-Monomer-Verteilungsverhältnis $R(M_z)/R(M_n)$ von über 0,995, wobei $R(M_z)$ das Verhältnis bei $M_z$ des IR-Signals, gemessen bei 2959 cm$^{-1}$ auf dem Signal bei 2928 cm$^{-1}$ ist, und $R(M_n)$ das Verhältnis bei $M_n$ des IR-Signals, gemessen bei 2959 cm$^{-1}$ auf dem Signal bei 2928 cm$^{-1}$ ist, wie durch IR-detektierte Gelpermeationschromatographie bestimmt; und
- einen xylenlöslichen Anteil (XS) von höchstens 3,0 Gew.-%, wobei der XS wie in der Beschreibung unter Testverfahren beschrieben gemessen wird.

2. Polypropylenzusammensetzung nach Anspruch 1, wobei die Differenz zwischen der Schmelztemperatur $T_m$ und der Kristallisierungstemperatur $T_c$ der Polypropylenzusammensetzung ($T_m-T_c$) größer als 33,0 °C ist.

3. Polypropylenzusammensetzung nach einem der Ansprüche 1 oder 2, wobei die Differenz zwischen der Schmelztemperatur $T_m$ und der Kristallisierungstemperatur $T_c$ der nichtnukleierten Polypropylenzusammensetzung ($T_m-T_c$) niedriger als 38,0 °C ist.

4. Polypropylenzusammensetzung nach einen der Ansprüche 1-3, die ein Verhältnis des z-gemittelten Molekulargewichts ($M_z$) zu dem zahlengemittelten Molekulargewicht ($M_n$) [$M_z/M_n$] von mindestens 6,0 aufweist.

5. Polypropylenzusammensetzung nach einem der Ansprüche 1-4, wobei der Schmelzflussindex des zweiten metallocen-katalysierten Polypropylens (RPP-B) größer als der Schmelzflussindex des ersten metallocen-katalysierten Polypropylens (RPP-A) ist; wobei die Werte des Schmelzflussindex nach ISO 1133:2005 Verfahren B, Bedingung M bei einer Temperatur von 230 °C und einer Belastung von 2,16 kg gemessen werden.

6. Polypropylenzusammensetzung nach einem der Ansprüche 1-5, wobei das Co-Monomer Ethylen ist.

7. Polypropylenzusammensetzung nach einem der Ansprüche 1-6, wobei der Schmelzflussindex des zweiten metallocen-katalysierten Polypropylens (RPP-B) größer als 40,0 g/10 min, bevorzugt von 40,0 bis 5000 g/10 min, noch bevorzugter von 40,0 bis 3000 g/10 min ist; wie nach ISO 1133:2005 Verfahren B, Bedingung M bei einer Temperatur von 230 °C und einer Belastung von 2,16 kg gemessen.

8. Polypropylenzusammensetzung nach einem der Ansprüche 1-7, wobei der Schmelzflussindex des ersten metallocen-katalysierten Polypropylens (RPP-A) höchstens 40,0 g/10 min, bevorzugt von 0,05 bis 40,0 g/10 min, noch bevorzugter von 0,05 bis 35,0 g/10 min ist; wie nach ISO 1133:2005 Verfahren B, Bedingung M bei einer Temperatur von 230 °C und einer Belastung von 2,16 kg gemessen

9. Polypropylenzusammensetzung nach einem der Ansprüche 1-8, umfassend: von 60 bis 80 Gew.-% des ersten metallocen-katalysierten Polypropylens (RPP-A), relativ zu dem Gesamtgewicht der Zusammensetzung.

10. Polypropylenzusammensetzung nach einem der Ansprüche 1-9, umfassend: von 20 bis 40 Gew.-% des zweiten metallocen-katalysierten Polypropylens (RPP-B), bevorzugt, relativ zum Gesamtgewicht der Zusammensetzung.

11. Polypropylenzusammensetzung nach einem der Ansprüche 1-10, die einen Schmelzflussindex im Bereich von 1,0 bis 200 g/10 min, bevorzugt von 1,0 bis 110 g/10 min, noch bevorzugter von 1,0 bis 80 g/10 min, noch bevorzugter von 1,0 bis 70 g/10 min aufweist; wie nach ISO 1133:2005 Verfahren B, Bedingung M bei einer Temperatur von 230 °C und einer Belastung von 2,16 kg gemessen.

12. Polypropylenzusammensetzung nach einem der Ansprüche 1-11, die ein Biegemodul von größer als 900 MPa aufweist, wobei das Biegemodul bei 23 °C nach ISO 178:2011 Verfahren A gemessen wird.

13. Polypropylenzusammensetzung nach einem der Ansprüche 1-12, wobei die Polypropylenzusammensetzung eine chemische (in-situ) Mischung aus dem ersten metallocen-katalysierten Polypropylen (RPP-A) und dem zweiten metallocen-katalysierten Polypropylen (RPP-B) umfasst.

14. Polypropylenzusammensetzung nach einem der Ansprüche 1-12, wobei die Polypropylenzusammensetzung eine physische Mischung aus dem ersten metallocen-katalysierten Polypropylen (RPP-A) und dem zweiten metallocen-katalysierten Polypropylen (RPP-B) umfasst.

15. Verfahren zur Zubereitung der Polypropylenzusammensetzung nach einem der Ansprüche 1-14, das die folgenden Schritte umfasst:

(i) Bereitstellen eines ersten metallocen-katalysierten Polypropylens (RPP-A), das ein Homopolymer ist, oder eines beliebigen Co-Polymers von Propylen und von einem Co-Monomer; und

(ii) Bereitstellen eines zweiten metallocen-katalysierten Polypropylens (RPP-B), das ein beliebiges Co-Polymer von Propylen und von einem Co-Monomer ist;

(iii) und Erhalten einer Polypropylenzusammensetzung, welche das erste und das zweite metallocen-katalysierte Polypropylen umfasst, wobei die Schritte (i) und (ii) durch Polymerisieren von Propylen und, gegebenenfalls, von dem Co-Monomer bei Vorliegen von mindestens einem Metallocen-Katalysator durchgeführt werden;

wobei die Polypropylenzusammensetzung Folgendes aufweist:

- einen Co-Monomer-Gesamtanteil von mindestens 1,1 Gew.-% relativ zu dem Gesamtgewicht der Polypropylenzusammensetzung, wie durch eine $^{13}$C NMR Analyse bestimmt, wobei das Co-Monomer ein Alpha-Olefin ist, das sich von Propylen unterscheidet;
- eine Schmelztemperatur $T_m$ von mindestens 130 °C, gemessen durch DSC;
- eine Kristallisierungstemperatur $T_c$ von mindestens 95,0 °C, gemessen durch DSC;
- ein Verhältnis des gewichtsmittleren Molekulargewichts ($M_w$) zu dem zahlenmittleren Molekulargewicht ($M_n$) [$M_w/M_n$] von mindestens 4,50;
- ein Verhältnis des z-mittleren Molekulargewichts ($M_z$) zu dem gewichtsmittleren Molekulargewicht ($M_w$) [$M_z/M_w$] von mindestens 2,10; und
- ein Co-Monomer-Verteilungsverhältnis R($M_z$)/R($M_n$) von über 0,995, wobei R($M_z$) das Verhältnis bei $M_z$ des IR-Signals, gemessen bei 2959 cm$^{-1}$ auf dem Signal bei 2928 cm$^{-1}$ ist, und R($M_n$) das Verhältnis bei $M_n$ des IR-Signals, gemessen bei 2959 cm$^{-1}$ auf dem Signal bei 2928 cm$^{-1}$ ist, wie durch IR-detektierte Gelpermeationschromatographie bestimmt und
- einen xylenlöslichen Anteil (XS) von höchstens 3,0 Gew.-%, wobei der XS wie in der Beschreibung unter Testverfahren beschrieben gemessen wird.

16. Polypropylenzusammensetzung nach einem der Ansprüche 1-14, die durch das Verfahren nach Anspruch 15 erhalten wird.

17. Artikel, der eine Polypropylenzusammensetzung nach einem der Ansprüche 1-14 oder 16 umfasst.

18. Verwendung einer Polypropylenzusammensetzung nach einem der Ansprüche 1-14, 16 für die Herstellung von gespritzten oder extrudierten Artikeln.

**Revendications**

1. Composition de polypropylène comprenant :

(a) un premier polypropylène catalysé par métallocène (RPP-A) qui est un homopolymère ou un copolymère aléatoire de propylène et d'un comonomère ; et

(b) un second polypropylène catalysé par métallocène (RPP-B) qui est un copolymère aléatoire de propylène et d'un comonomère ;

dans laquelle ladite composition de polypropylène présente :

- une teneur totale en comonomères d'au moins 1,1 % en poids par rapport au poids total de ladite composition de polypropylène, telle que déterminée par analyse par RMN du carbone 13, ledit comonomère étant une alpha-oléfine différente du propylène ;
- une température de fusion $T_m$ d'au moins 130 °C, mesurée par DSC ;
- une température de cristallisation $T_c$ d'au moins 95,0 °C, mesurée par DSC ;
- un rapport entre la masse moléculaire moyenne en poids ($M_w$) et la masse moléculaire moyenne en nombre ($M_n$) [$M_w/M_n$] d'au moins 4,50 ;
- un rapport entre la masse moléculaire moyenne z ($M_z$) et la masse moléculaire moyenne en poids ($M_w$) [$M_z/M_w$] d'au moins 2,10 ; et
- un rapport de distribution des comonomères $R(M_z)/R(M_n)$ supérieur à 0,995, dans lequel $R(M_z)$ est le rapport à $M_z$ du signal IR mesuré à 2959 cm$^{-1}$ sur le signal à 2928 cm$^{-1}$, et $R(M_n)$ est le rapport à $M_n$ du signal IR mesuré à 2959 cm$^{-1}$ sur le signal à 2928 cm$^{-1}$, tel que déterminé par chromatographie par perméation de gel détectée par IR ; et
- une teneur en xylène soluble (XS) d'au plus 3,0 % en poids, dans laquelle le XS est mesuré tel que défini dans la description des méthodes d'essai.

2. Composition de polypropylène selon la revendication 1, dans laquelle la différence entre la température de fusion $T_m$ et la température de cristallisation $T_c$ de la composition de polypropylène ($T_m$-$T_c$) est supérieure à 33,0 °C.

3. Composition de polypropylène selon l'une quelconque des revendications 1 ou 2, dans laquelle la différence entre la température de fusion $T_m$ et la température de cristallisation $T_c$ de la composition de polypropylène non nucléé ($T_m$-$T_c$) est inférieure à 38,0 °C.

4. Composition de polypropylène selon l'une quelconque des revendications 1 à 3, présentant un rapport entre la masse moléculaire moyenne z ($M_z$) et la masse moléculaire moyenne en nombre ($M_n$) [$M_z/M_n$] d'au moins 6,0.

5. Composition de polypropylène selon l'une quelconque des revendications 1 à 4, dans laquelle l'indice de fluidité à chaud du second polypropylène catalysé par métallocène (RPP-B) est supérieur à l'indice de fluidité à chaud du premier polypropylène catalysé par métallocène (RPP-A) ; les valeurs de l'indice de fluidité à chaud étant mesurées conformément à la norme ISO 1133:2005 Méthode B, condition M, à une température de 230 °C et à une charge de 2,16 kg.

6. Composition de polypropylène selon l'une quelconque des revendications 1 à 5, dans laquelle ledit comonomère est de l'éthylène.

7. Composition de polypropylène selon l'une quelconque des revendications 1 à 6, dans laquelle l'indice de fluidité à chaud du second polypropylène catalysé par métallocène (RPP-B) est supérieur à 40,0 g/10 min, préférablement de 40,0 à 5000 g/10 min, plus préférablement de 40,0 à 3000 g/10 min ; tel que mesuré conformément à la norme ISO 1133:2005 Méthode B, condition M, à une température de 230 °C et à une charge de 2,16 kg.

8. Composition de polypropylène selon l'une quelconque des revendications 1 à 7, dans laquelle l'indice de fluidité à chaud du premier polypropylène catalysé par métallocène (RPP-A) est au plus de 40,0 g/10 min, préférablement de 0,05 à 40,0 g/10 min, plus préférablement de 0,05 à 35,0 g/10 min ; tel que mesuré conformément à la norme ISO 1133:2005 Méthode B, condition M, à une température de 230 °C et à une charge de 2,16 kg.

9. Composition de polypropylène selon l'une quelconque des revendications 1 à 8, comprenant : de 60 à 80 % en poids du premier polypropylène catalysé par métallocène (RPP-A), par rapport au poids total de la composition.

10. Composition de polypropylène selon l'une quelconque des revendications 1 à 9, comprenant : de 20 à 40 % en poids du second polypropylène catalysé par métallocène (RPP-B), par rapport au poids total de la composition.

11. Composition de polypropylène selon l'une quelconque des revendications 1 à 10, présentant un indice de fluidité à chaud allant de 1,0 à 200 g/10 min, préférablement de 1,0 à 110 g/10 min, plus préférablement de 1,0 à 80 g/10 min, plus préférablement de 1,0 à 70 g/10 min ; tel que mesuré conformément à la norme ISO 1133:2005 Méthode B, condition M, à une température de 230 °C et à une charge de 2,16 kg.

12. Composition de polypropylène selon l'une quelconque des revendications 1 à 11, présentant un module de flexion supérieur à 900 MPa, le module de flexion étant mesuré à 23 °C conformément à la norme ISO 178:2011 méthode A.

13. Composition de polypropylène selon l'une quelconque des revendications 1 à 12, dans laquelle ladite composition de polypropylène comprend un mélange chimique (in situ) dudit premier polypropylène catalysé par métallocène (RPP-A) et dudit second polypropylène catalysé par métallocène (RPP-B).

14. Composition de polypropylène selon l'une quelconque des revendications 1 à 12, dans laquelle ladite composition de polypropylène comprend un mélange physique dudit premier polypropylène catalysé par métallocène (RPP-A) et dudit second polypropylène catalysé par métallocène (RPP-B).

15. Procédé de préparation de la composition de polypropylène selon l'une quelconque des revendications 1 à 14, comprenant comme étapes :

(i) fournir un premier polypropylène catalysé par métallocène (RPP-A) qui est un homopolymère ou un copolymère aléatoire de propylène et d'un comonomère ; et
(ii) fournir un second polypropylène catalysé par métallocène (RPP-B) qui est un copolymère aléatoire de propylène et d'un comonomère ;
(iii) obtenir une composition de polypropylène comprenant lesdits premier et second polypropylène catalysés par métallocène, dans lequel les étapes (i) et (ii) sont réalisées en polymérisant le propylène et, le cas échéant, le comonomère en présence d'au moins un catalyseur métallocène ;

ladite composition de polypropylène présentant :

- une teneur totale en comonomères d'au moins 1,1 % en poids par rapport au poids total de ladite composition de polypropylène, telle que déterminée par analyse par RMN du carbone 13, ledit comonomère étant une alpha-oléfine différente du propylène ;
- une température de fusion $T_m$ d'au moins 130 °C, mesurée par DSC ;
- une température de cristallisation $T_c$ d'au moins 95,0 °C, mesurée par DSC ;
- un rapport entre la masse moléculaire moyenne en poids ($M_w$) et la masse moléculaire moyenne en nombre ($M_n$) [$M_w/M_n$] d'au moins 4,50 ;
- un rapport entre la masse moléculaire moyenne z ($M_z$) et la masse moléculaire moyenne en poids ($M_w$) [$M_z/M_w$] d'au moins 2,10 ; et
- un rapport de distribution des comonomères $R(M_z)/R(M_n)$ supérieur à 0,995, dans lequel $R(M_z)$ est le rapport à $M_z$ du signal IR mesuré à 2959 cm$^{-1}$ sur le signal à 2928 cm$^{-1}$, et $R(M_n)$ est le rapport à $M_n$ du signal IR mesuré à 2959 cm$^{-1}$ sur le signal à 2928 cm$^{-1}$, tel que déterminé par chromatographie par perméation de gel détectée par IR, et
- une teneur en xylène soluble (XS) d'au plus 3,0 % en poids, dans laquelle le XS est mesuré tel que défini dans la description des méthodes d'essai.

16. Composition de polypropylène selon l'une quelconque des revendications 1 à 14, obtenue par le procédé selon la revendication 15.

17. Article comprenant une composition de polypropylène selon l'une quelconque des revendications 1 à 14 ou 16.

18. Utilisation d'une composition de polypropylène selon l'une quelconque des revendications 1 à 14 ou 16, pour la production d'articles injectés ou extrudés.

FIG. 1

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2535372 A1

- WO 2012072776 A

**Non-patent literature cited in the description**

- Plastics Additives Handbook. Hanser Publishers, 2001
- **A. ORTIN et al.** *Macromol. Symp.,* 2013, vol. 330, 63-80

- **T. FRIJNS-BRULS et al.** *Macromol. Symp.,* 2015, vol. 356, 87-94
- *CHEMICAL ABSTRACTS,* 888227-55-2